(19) Europäisches Patentamt / European Patent Office / Office européen des brevets

(11) **EP 2 021 908 B1**

(12) **EUROPEAN PATENT SPECIFICATION**

(45) Date of publication and mention of the grant of the patent:
**29.10.2014 Bulletin 2014/44**

(21) Application number: **07797807.0**

(22) Date of filing: **25.05.2007**

(51) Int Cl.:
*G06F 3/14* *(2006.01)*    *H04W 28/22* *(2009.01)*

(86) International application number:
**PCT/US2007/069815**

(87) International publication number:
**WO 2007/140344 (06.12.2007 Gazette 2007/49)**

(54) **WIRELESS ARCHITECTURE FOR A TRADITIONAL WIRE-BASED PROTOCOL**

DRAHTLOSE ARCHITEKTUR FÜR EIN TRADITIONELLES DRAHTBASIERTES PROTOKOLL

ARCHITECTURE SANS FIL POUR PROTOCOLE FILAIRE TRADITIONNEL

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.05.2006 US 809068 P**

(43) Date of publication of application:
**11.02.2009 Bulletin 2009/07**

(73) Proprietor: **Qualcomm Incorporated**
**San Diego, CA 92121 (US)**

(72) Inventors:
 • **KRISHNAMOORTHI, Raghuraman**
  **San Diego, California 92126 (US)**
 • **DHARMARAJU, Dinesh**
  **San Diego, California 92121-1714 (US)**
 • **LEUNG, Lauren**
  **San Diego, California 92126 (US)**

(74) Representative: **Carstens, Dirk Wilhelm**
**Wagner & Geyer**
**Gewürzmühlstraße 5**
**80538 München (DE)**

(56) References cited:
**US-A1- 2003 033 417    US-A1- 2005 184 993**

## Description

## BACKGROUND

### I. Field

The following description relates generally to communication systems and more particularly to enabling traditional wire-based devices to communicate over a wireless link and/or a wired link and communicating digital data at a high rate.

### II. Background

Wireless networking systems are utilized by many to communicate wherever the user may be located at a particular time (*e.g.,* home, office, traveling, ...). Wireless communication devices have become smaller and more powerful (*e.g.,* increased functionality and/or applications, larger memory capacity) to meet user needs while improving portability and convenience. Users have found many uses for wireless communication devices including cellular telephones, personal digital assistants (PDAs) and the like. For example, wireless communication devices can include functionality to capture and process images (*e.g.,* still images, moving images, video gaming, and the like).

Applications and/or functionalities that operate utilizing very high data rates can have substantial power requirements and/or high current levels. Such power requirements and/or current levels are readily available for devices that communicate utilizing a wired protocol. However, wireless communication systems may not have the capability to operate utilizing the high data rates. Thus, the communication a user desires to send and/or receive can be limited in some situations.

Some devices have traditionally only operated in a wired capacity, such as, for example, a Mobile Display Digital Interface (MDDI). Thus, a user having such a device may not be able to communicate while mobile and may need to expend further costs to obtain a wireless device, which may not always be feasible. In some situations, a user may decide to operate two devices, one with wired capacity and one with wireless capacity to achieve the benefits of both devices. However, the costs associated with two devices, as well as keeping track of both devices, might impose an undue burden on a user.

To overcome the aforementioned as well as other deficiencies, provided is a technique for allowing a traditionally wired-based protocol to communicate over either the wired architecture or a wireless architecture. The disclosed techniques provide such flexibility with minimal changes to the wired architecture.

Further attention is drawn to the document US-A-2003033417, which discloses a data Interface for transferring digital data between a host and a client over a communication path using packet structures linked together to form a communication protocol for communicating a pre-selected set of digital control and presentation data. The signal protocol is used by link controllers configured to generate, transmit, and receive packets forming the communications protocol, and to form digital data into one or more types of data packets, with at least one residing in the host device and being coupled to the client through the communications path. The interface provides a cost-effective, low power, bi-directional, high-speed data transfer mechanism over a short-range "serial" type data link, which lends itself to implementation with miniature connectors and thin flexible cables which are especially useful in connecting display elements such as wearable micro-displays to portable computers and wireless communication devices.

## SUMMARY

In accordance with the present invention a method for communicating digital data, as set forth in claim 1, an apparatus, as set forth in claims 7 and 9, a computer-readable medium, as set forth in claim 10, and a method, as set forth in claim 8, are provided. Embodiments of the claims are defined in the dependent claims.

## BRIEF DESCRIPTION OF THE DRAWINGS

Fig. 1 illustrates a block diagram of a system for enabling a traditional wire-based device to communicate wirelessly.
Fig. 2 illustrates a wireless sender in accordance with the one or more disclosed embodiments.
Fig. 3 illustrates another wireless sender with a co-located host and client.
Fig. 4 illustrates another example of a wireless sender wherein the host and C1 are consolidated onto a single hardware/software entity.
Fig. 5 illustrates a wireless receiver in accordance with the disclosed embodiments.

Fig. 6 illustrates a system for extending the capabilities of a traditionally wired configuration to allow communication over a wireless link.

Fig. 7 illustrates a system for communicating through wired and/or wireless architectures.

Fig. 8 illustrates another embodiment of a system for extending traditionally wired configurations to allow communication over a wireless link.

Fig. 9 illustrates a system for communicating over a wired link or a wireless link with a traditionally wired device.

Fig. 10 illustrates an exemplary forward link MDDI data transfer in low-overhead mode in accordance with the various embodiments presented herein.

Fig. 11 illustrates an exemplary reverse link MDDI data transfer in low-overhead mode in accordance with the various embodiments presented herein.

Fig. 12 illustrates a low-latency mode MDDI connection setup in accordance with the various embodiments presented herein.

Fig. 13 illustrates a methodology for configuring a traditionally wired device to communicate through a wired protocol and/or a wireless protocol.

Fig. 14 illustrates a methodology for determining an operation rate according to the one or more disclosed embodiments.

Fig. 15 illustrates a methodology for communicating in low overhead mode according to the various embodiments presented herein.

Fig. 16 illustrates a methodology for communicating in low latency mode according to the various embodiments presented herein.

Fig. 17 illustrates a single wireless sender associating with multiple wireless receivers in accordance with the disclosed embodiments

Fig. 18 is a device association table that illustrates an association of a single wireless sender with multiple wireless receivers.

Fig. 19 illustrates a method for wirelessly communicating digital data at a high rate.

Fig. 20 illustrates a method for communicating high rate digital data wirelessly.

Fig. 21 illustrates a method for receiver-initiated dissociation between a user device and a host entity.

Fig. 22 illustrates a method for high rate wireless digital data communication between a sender at one or more remote receivers for user interface data.

Fig. 23 illustrates a method for high rate wireless data communication between a sender and a remote receiver.

Fig. 24 illustrates a method for selective disassociation between a sender and a remote receiver.

Fig. 25 illustrates an apparatus that can be configured to communicate high rate digital data wirelessly with a remote host device.

Fig. 26 illustrates an apparatus for wirelessly communicating high rate user interface data with a remote sender.

Fig. 27 illustrates an apparatus that can be configured to wirelessly communicate high rate user interface data.

Fig. 28 illustrates an apparatus for wirelessly communicating user interface data at a high rate.

Fig. 29 illustrates a conceptual block diagram of a possible configuration of a terminal.

## DETAILED DESCRIPTION

Various embodiments are now described with reference to the drawings. In the following description, for purposes of explanation, numerous specific details are set forth in order to provide a thorough understanding of one or more aspects. It may be evident, however, that such embodiment(s) may be practiced without these specific details. In other instances, well-known structures and devices are shown in block diagram form in order to facilitate describing these embodiments.

As used in this application, the terms "component," "module," "system," and the like are intended to refer to a computer-related entity, either hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets (e.g., data from one component interacting with another component in a local system, distributed system, and/or across a network such as the Internet with other systems by way of the signal).

Furthermore, various embodiments are described herein in connection with a user device. A user device can also be called a system, a subscriber unit, subscriber station, mobile station, mobile device, remote station, access point, base station, remote terminal, access terminal, handset, user terminal, terminal, user agent, or user equipment. A user device can be a cellular telephone, a cordless telephone, a Session Initiation Protocol (SIP) phone, a wireless local loop (WLL) station, a PDA, a handheld device having wireless connection capability, or other processing device(s) connected to a wireless modem.

Moreover, various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g.,* hard disk, floppy disk, magnetic strips...), optical disks (*e.g.,* compact disk (CD), digital versatile disk (DVD)...), smart cards, and flash memory devices (*e.g.*, card, stick, key drive...).

In the following detailed description, various aspects and embodiments may be described in the context of a Mobile Display Digital Interface (MDDI) and/or Institute of Electrical and Electronics Engineers (IEEE) 802.15.3 medium access control (MAC) layer. While these inventive aspects may be well suited for use with the disclosed embodiments, those skilled in the art will readily appreciate that these inventive aspects are likewise applicable for use in various other traditionally wire based protocols. Accordingly, any reference to an MDDI and/or IEEE 802.15.3 MAC is intended only to illustrate the inventive aspects, with the understanding that such inventive aspects have a wide range of applications.

Various embodiments will be presented in terms of systems that may include a number of components, modules, and the like. It is to be understood and appreciated that the various systems may include additional components, modules, *etc.* and/or may not include all of the components, modules, *etc.* discussed in connection with the figures. A combination of these approaches may also be used. In addition, the various systems can be implemented in a plurality of mobile devices (*e.g.*, cellular phones, smart phones, laptops, handheld communication devices, handheld computing devices, satellite radios, global positioning systems, PDAs, and/or other suitable devices).

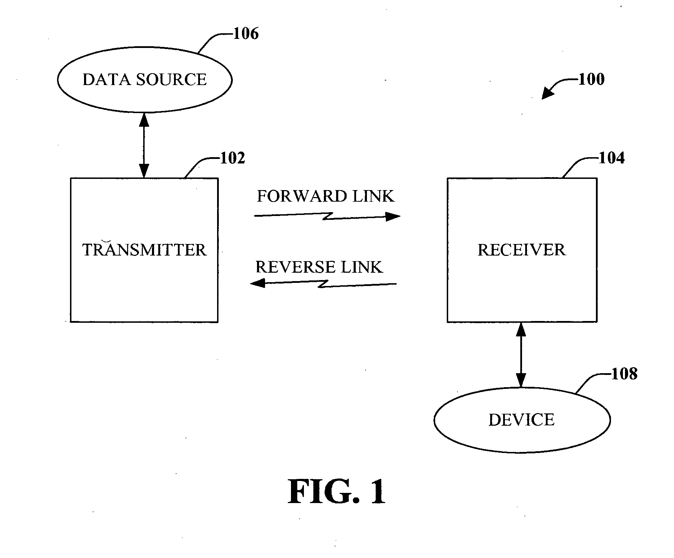

With reference now to the drawings, **Fig. 1** illustrates a block diagram of a system 100 for enabling a traditional wire-based device to communicate wirelessly. System 100 includes a transmitter 102 in wired and/or wireless communication with a receiver 104. Transmitter 102 and receiver 104 can be components that traditionally communicate over a wire-based protocol. Although a number of transmitter(s) 102 and receiver(s) 104 can be included in system 100, as will be appreciated, a single transmitter 102 that transmits communication data signals to a single receiver 104 is illustrated for purposes of simplicity.

The communication sent from transmitter 102 to receiver 104 is referred to as the forward link and the communication sent from receiver 104 to transmitter 102 is referred to as the reverse link. Transmitter 102 may be connected to a data source 106 (*e.g.*, storage, memory, and the like) and receiver 104 may be connected to an interface device 108, such as a display.

System 100 can operate in at least two modes of operation, namely, a low overhead mode and/or a low latency mode. Low overhead mode optimizes a packet sent over the air (*e.g.*, wirelessly) by requesting channel allocation time(s), which is the time for data to be sent from either direction (from sender to receiver or from receiver to sender). In low latency mode, the channel allocation time(s) can be determined based on knowledge of the data included in both the forward link and the reverse link.

Transmitter 102 can be configured to ascertain a forward link rate and reverse link rate based on various criteria (e.g., round trip delay measurements). Transmitter 102 can send at least one reverse link encapsulation packet every frame. The reverse link encapsulation packet can be used to accommodate the transfer of reverse packets over the transfer link, creating the reverse link.

Receiver 104 can be configured to receive and/or send data communication through a wired functionality and/or a wireless functionality. The determination of which functionality to utilize can be based on various criteria including type of data (*e.g.*, voice, text, image, ...), the traditional method of communicating the data (*e.g.*, wired link or wireless link), the size of the file or packet being transmitted, as well as other criteria relating to the data, the sender, and/or the receiver. Transmitter 102 can communicate the data without knowledge of how receiver 104 is receiving the data (*e.g.*, wired or wireless).

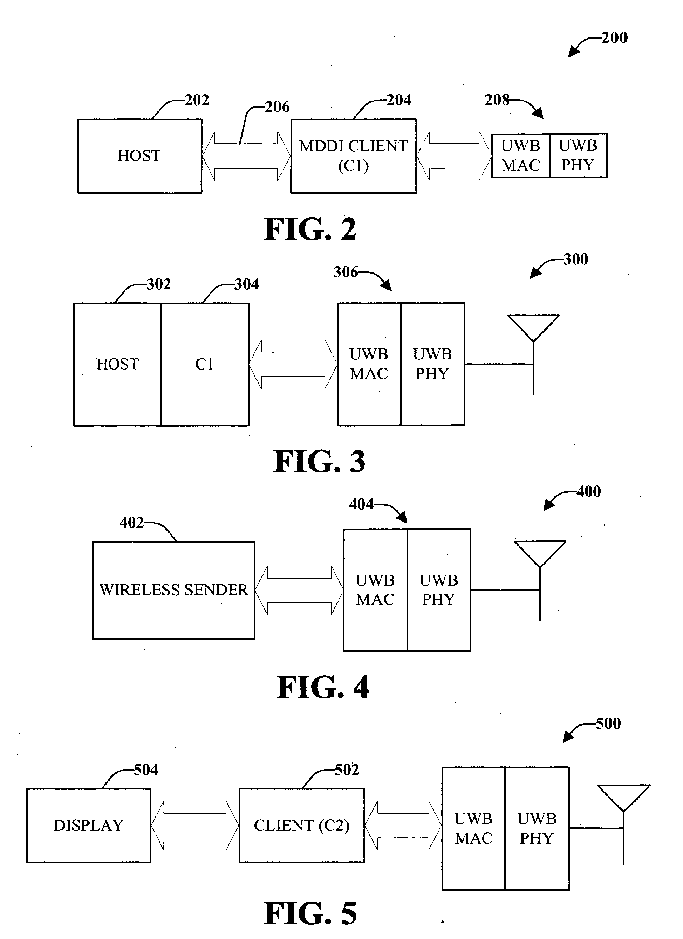

**Fig. 2** illustrates a wireless sender 200 in accordance with the one or more disclosed embodiments. Wireless sender 200 can be configured to communicate high rate data, such as digital data. The various wireless systems described herein can include a wireless sender and a wireless receiver. Wireless sender 200 can include a host 202 and a special client (C1) 204, which can be connected to one or more displays or devices. Host 202 and Client (C1) 204 can be connected by a traditional high data rate link (e.g., MDDI) 206. The module containing Client (C1) 204 and a wireless modem 208, such as an ultra wide band modem that includes an UWB MAC and an UWB PHY, can be operatively connected into an existing wired link, such as an MDDI link or a link configured to support high rate data. In some embodiments, if Client (C1) 204 and the modem 208 are connected to a wired link, the host 202 may need upgrading to handle wireless functionalities, which will be described in further detail below. **Fig. 3** illustrates another wireless sender 300 with a co-located host 302 and client 304. Also included is a wireless modem 306. Another example of a wireless sender 400 is illustrated in **Fig. 4,** wherein the host and C1 are consolidated onto a single hardware/software entity 402.

A wireless modem 404 is included to facilitate wireless communication.

With reference now to **Fig. 5,** illustrated is a wireless receiver 500 in accordance with the disclosed embodiments. Wireless receiver 500 includes a client (C2) 502, which can be connected to several device(s) and display(s) 504 (only one display is shown for purposes of simplicity). Client (C2) 502 can be configured to process and generate high rate digital data packets. In some embodiments, client (C2) 502 does not have a physical layer of an MDDI stack. A single sender can be connected to several receivers in accordance with the disclosed embodiments.

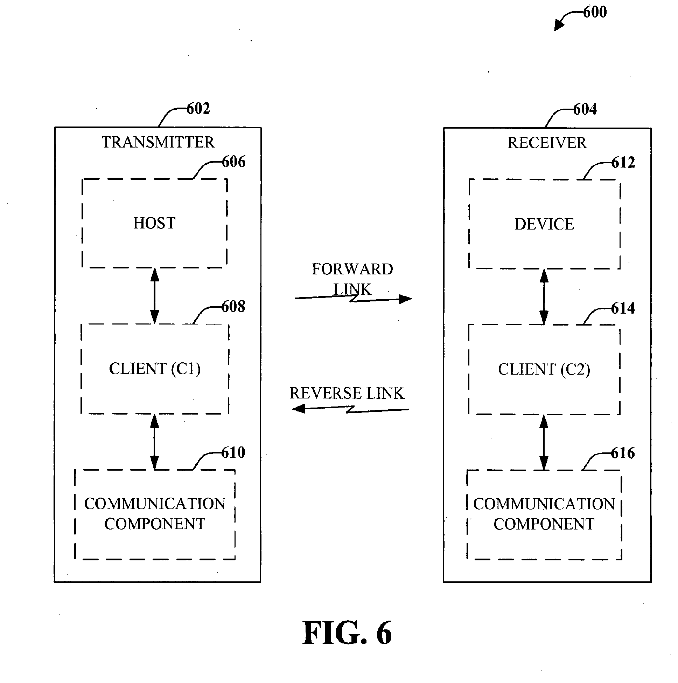

**Fig. 6** illustrates a system 600 for extending the capabilities of a traditionally wired configuration to allow communication over a wireless link. System 600 includes a transmitter 602 that communicates with a receiver 604 over a forward link. Receiver 604 communicates with the transmitter 602 over a reverse link. Transmitter 602 and receiver 604 can be devices that generally communicate over a wired protocol, however, system 600 allows such devices to communicate over the wired protocol and/or over a wireless protocol, such as over a high-speed wireless link. Although a number of transmitter(s) 602 and receiver(s) 604 can be included in system 600, as will be appreciated, a single transmitter 602 that transmits communication data signals to a single receiver 604 is illustrated for purposes of simplicity.

Transmitter 602 can include a host 606, a portion of a client (C1) 608, and a communication component 610. Host 606 can be an MDDI host, for example. In some embodiments, host 606 can be a component separate from transmitter 602 and connected to transmitter 602 through a wired link. A portion of client (C1) 608 is kept on or in communication with host 606 for clock synchronization. Client (C1) 608 can be connected to host 606 through a traditional wired link (*e.g.*, MDDI link), for example. Host 606 can be configured to send or communicate packets of data to client (C1) 608. These packets can be communicated to receiver 604 through communication component 610, which can include a modem, such as an ultra wide band (UWB) modem. Some packets (*e.g.*, MDDI round-trip delay measurement packet) are processed by client (C1) 608 and communicated to receiver 604. Other packets (*e.g.*, filler packets) should be dropped by client (C1) 608 and not communicated to receiver 604. That is to say, some packets should not be transmitted on either the forward wireless link or the reverse wireless link. A filler packet, for example, maintains timing between transmitter 602 and receiver 604. Such packets can be generated by either transmitter 602 or receiver 604 through respective client portions.

Receiver 604 can include an interface device 612 (*e.g.*, display), a portion of client (C2) 614, and a communication component 616. In some embodiments, the device 612 can be a component separate from the receiver 604 and connected to the receiver 604 through, for example, a wired link. Client (C2) 614 can be connected to device 612 through a wired link. Client (C2) 614 can be configured to process a packet received from transmitter 602. Receiver 604 can receive the communication from transmitter 602 through communication component 616 that can include, for example, an UWB modem.

System 600 can be configured to operate in one of two modes of operation. These modes include a low overhead mode and a low latency mode. In low overhead mode, client (C1) 608 places the data to be sent, excluding for example, fill packets and round trip delay packets, in a buffer that can be included on the communication component 610 (*e.g.*, UWB modem). The communication component 610, through a UWB MAC, for example, can periodically request unidirectional channel time allocations (CTA) from transmitter 602 to receiver 604 based on the size of the buffer. In a reverse direction (*e.g.*, reverse link), client (C2) 614 can place the reverse link data that it wants to send, excluding filler packets, for example, in a buffer associated with communication component 616 (*e.g.*, UWB modem). In the reverse direction, the communication component 616 can request reverse-direction CTAs.

For low latency mode, during an initialization phase, communication component 610 (*e.g.,* UWB modem) can request a CTA for $m$ msec in the forward direction and a CTA for $n$ msec in the reverse direction. The expected ratio of traffic in the forward and reverse directions is $m : n$ and $m$ sec is the duration corresponding to a forward link transfer rate of $R_{f\text{-}mddi}$. $T$ is a superframe duration, which is determined by the latency constraints of the application where:

$$(m + n) < T_{CTAP} < T$$

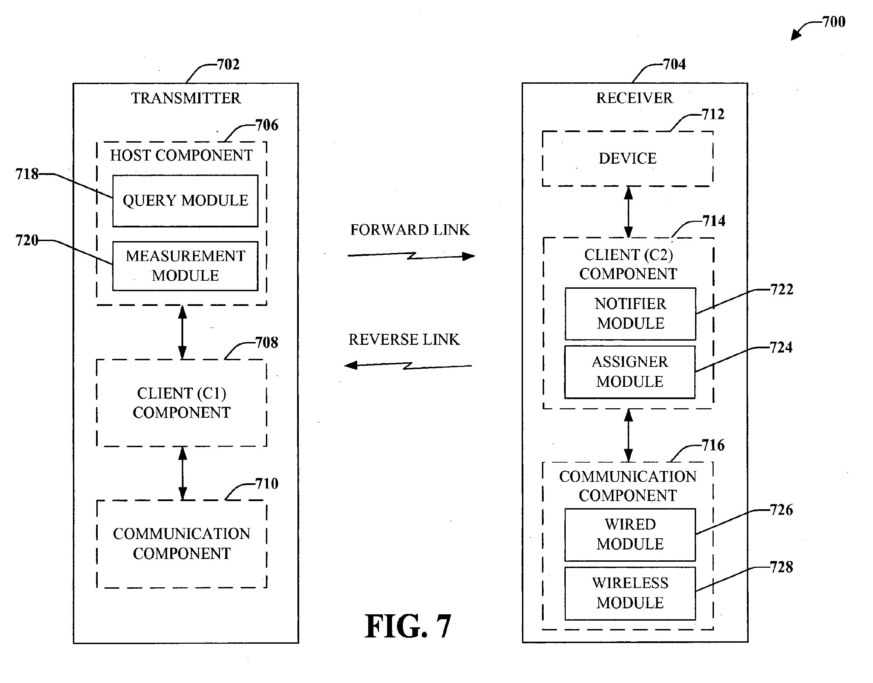

With reference now to **Fig. 7,** illustrated is a system 700 for communicating through wired and/or wireless architectures. System 700 includes a transmitter 702 and a receiver 704 that communicate over a forward link (from transmitter 702) and/or a reverse link (from receiver 704). The communication over the forward link and/or reverse link can be over a wired protocol and/or over a wireless protocol depending on the particular situation (*e.g.*, data to be transmitted, data rates, quality of communication link, status of each device, ...). Although a number of transmitter(s) 702 and receiver(s) 704 can be included in system 700, as will be appreciated, a single transmitter 702 that transmits communication data signals to a single receiver 706 is illustrated for purposes of simplicity.

Transmitter 702 can include a host component 706 connected to a client (C1) component 708 and a communication component 710. Receiver 704 can include a device 712 connected to a client (C2) component 714 and a communication component 716. Client (C1) component 708 and client (C2) component 714 are respective portions of a client.

It will be understood by persons having ordinary skill in the art that transmitter 702 and/or receiver 704 can include additional components. For example, transmitter 702 can include an encoder component (not shown) that can modulate and/or encode signals in accordance with a suitable wireless communication protocol which signals can then be transmitted to receiver 704. In some embodiments, encoder component can be a voice coder (vocoder) that utilizes a speech analyzer to convert analog waveforms into digital signals or another type of encoder. Suitable wireless communication protocols can include, but are not limited to, Orthogonal Frequency Division Multiplexing (OFDM), Orthogonal Frequency Division Multiplexing Access (OFDMA), Code Division Multiple Access (CDMA), Time Division Multiple Access (TDMA), Global System for Mobile Communications (GSM), High-Speed Downlink Packet Access (HSDPA), and the like.

Receiver 704 can include a decoder component (not shown) that can decode a received signal and/or data packet therein for processing. Upon successful decode of a data packet, an acknowledgment component (not shown) can generate an acknowledgment that indicates successful decode of the data packet, which can be sent to transmitter 702 to inform transmitter 702 that the data packet was received and decoded, and therefore need not be retransmitted.

Host component 706 can include a query module 718 and a measurement module 720. Query module 718 can be configured to query a host medium access control (MAC) for an application data rate that the MAC provides. For wireless communication, the operation rate may depend upon the rate of the wireless link. Measurement module 720 can be configured to determine the forward link rate and the reverse link rate based on, for example, a round trip delay measurement, which may be specified in the wireless protocol. In some embodiments, the wireless operation rate can be determined by the minimum of the two rates (forward link rate and reverse link rate), the maximum capacity of host 706, and the maximum capacity of client (C1) 708. There should be a minimum allowable rate $R_{min}$. If the measured operation rate is below this minimum allowable rate, the operation rate can be adjusted by transmitter 702 and/or receiver 704 through respective components (*e.g.*, communication components 710 and/or 716). Transmitter 702 can notify receiver 704 the rate at which the communication will be processed.

Client (C2) component 714 can include a notifier module 722 that can be configured to notify transmitter 702 the application data rate that the MAC provides. Such notification can be based on a query received from transmitter 702 (*e.g.*, a query sent by query module 718). For reverse link packets, notifier module 722 can specify the number of bytes needed by receiver 704 to send on the reverse link in the current frame. Client (C2) component can also include an assigner module 724 that can be configured to assign a communication to a wired protocol or a wireless protocol depending on various parameters associated with a communication (*e.g.*, communication type, rate of communication, sender, receiver, and the like).

Communication component 716 can include a wired module 726 and a wireless module 728. The wired module 726 can be configured to provide wired functionality and the wireless module 728 can be configured to provide wireless functionality. A determination can be made whether to communicate wirelessly utilizing the wireless module 728 or to communicate utilizing the wired module 726. Such a determination can be based on a variety of factors including the operation rate, the type of data being transmitted (*e.g.*, voice, text, image, ...), the size of the data or files being transmitted, if the data is typically communicated over a wired link or a wireless link, *etc*. Wired module 726 and/or wireless module 728 can include a buffer for storing content so that if a change is made during a communication from one module to the other module (*e.g.*, wireless to wired, wired to wireless) communication is not lost due to switchover issues.

Information about whether the receiver 704 is communicating over a wired link or wireless link does not need to be communicated to transmitter 702. Transmitter 702 performs its functions in substantially the same way regardless of the communication method (wired or wireless).

According to some embodiments, transmitter 702 can include a component configured to fragment a sub-frame (not shown) and receiver 704 can include a component configured to reassemble the sub-frame (not shown). The maximum length of a MDDI sub-frame, for example, can be about 65,536 bytes, although it is generally smaller. The maximum size of an 802.15.3 MAC frame can be approximately 4,096 or around 8,192 bytes, if the underlying rate is about 480 Mbps. The size can be around 2,048 bytes if the underlying physical layer rate is approximately 200 Mbps. Thus, the sub-frame may need to be fragmented on the transmitter 702 side and reassembled on the receiver 704 side to accommodate the size of the frame. Such fragmenting and reassembly can be performed by respective communication components 710 and 716 and/or other components associated with transmitter 702 and receiver 704.

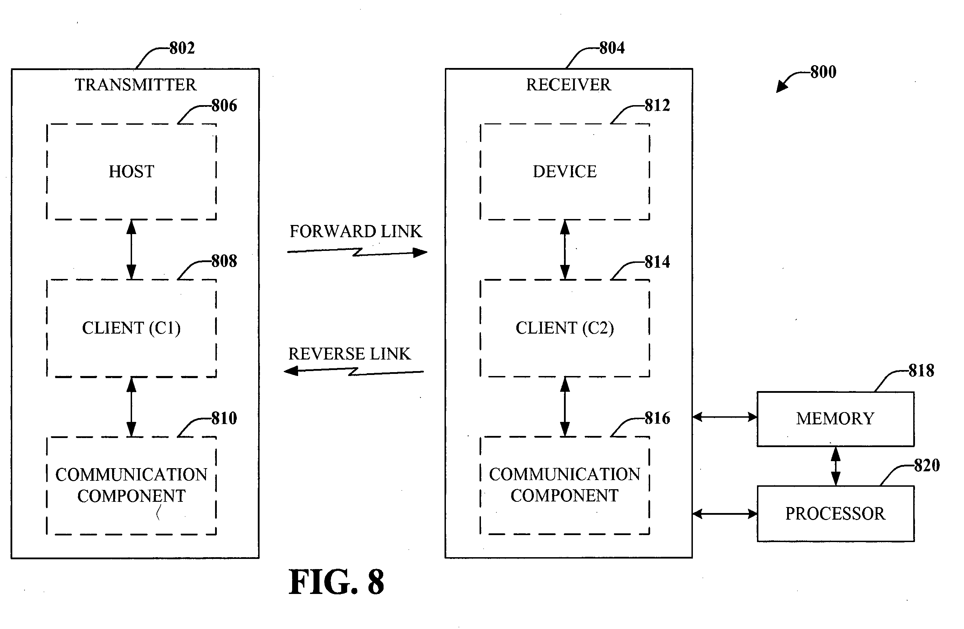

**Fig. 8** illustrates another embodiment of a system 800 for extending traditionally wired configurations to allow communication over a wireless link. System 800 can include a transmitter 802 that includes a host 806, a portion of a client (C1) 808, and a communication component 810. System 800 can also include a receiver 804 that includes a device 812, a portion of a client (C2) 814, and a communication component 816. Transmitter 802 communicates to receiver 804 over a forward link and receiver 804 communicates to transmitter 802 over a reverse link. As noted previously with regard to the above figures, although a number of transmitter(s) 802 and receiver(s) 804 can be included in system 800, a single transmitter 802 that transmits communication data signals to a single receiver 804 is illustrated for purposes of simplicity.

System 800 can include a memory 818 operatively coupled to receiver 804. Memory 818 can store information related to a data rate for a packet and/or a packet type (*e.g.*, application data rate provided by MAC, operation rate of the wireless link, ...), mode of operation for a packet and/or packet type, and/or other parameters associated with transmitting data over a wireless protocol, over a wired protocol, or a combination of these protocols. For example, a wired protocol can be used for a communication and a decision can be made to switch to a wireless protocol during the communication, or vice versa, without interruption or termination.

A processor 820 can be operatively connected to receiver 804 (and/or memory 818) to facilitate analysis of information related to ascertaining whether a particular communication should be sent over a wired protocol or a wireless protocol. Processor 820 can be a processor dedicated to analyzing and/or generating information communicated to receiver 804, a processor that controls one or more components of system 800, and/or a processor that both analyzes and generates information received by receiver 804 and controls one or more components of system 800.

Memory 818 can store protocols associated with data communication rates, operation rates, taking action to control communication between receiver 804 and transmitter 802, *etc.,* such that system 800 can employ stored protocols and/or algorithms to achieve improved communication in a wireless network as described herein. It should be appreciated that the data store (e.g., memories) components described herein can be either volatile memory or nonvolatile memory, or can include both volatile and nonvolatile memory. By way of example and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of example and not limitation, RAM is available in many forms such as synchronous RAM (DRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Memory 818 of the disclosed embodiments are intended to comprise, without being limited to, these and other suitable types of memory.

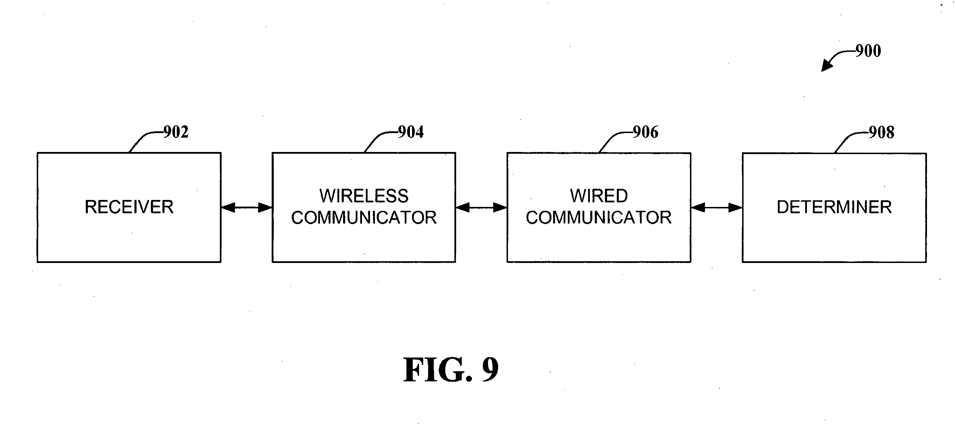

**Fig. 9** illustrates a system 900 for communicating over a wired link or a wireless link with a traditional wired device. System 900 is represented as functional blocks, which can be functional blocks that represent functions implemented by a processor, software or combination thereof (e.g.*,* firmware). System 900 includes a receiver 902 that can be configured to receive an operation rate for a communication. This operation rate can be received from, for example, a sender or a sender host. The operation rate can set up or establish the rate of communication in both a forward direction and a reverse direction. System 900 also includes a wireless communicator 904 that can be configured to send and/or receive a communication over a wireless protocol. A wired communicator 906 can be configured to send and/or receive a communication over a wired protocol.

It should be noted that in a forward and/or a reverse direction there may be packet extensions and/or new packets. For example, in a forward direction MDDI sender information can be added to a packet. This packet extension can provide an MDDI client on the receiver end with MDDI sender side information. This information can include the rate at which the MDDI host and client should operate on the sender side. In the reverse direction, extensions to a client capability packet can include about four bytes for MDDI receiver MAC information and around two bytes for MDDI receiver client information, however other extensions are also possible.

Also included in system 900 is a determiner that can selectively determine whether to utilize the wireless communicator to communicate over the wireless protocol or whether to utilize the wired communicator to communicate over the wired protocol. Such a determination can be selectively made based on various parameters, such as the communication operation rate. Other parameters can also be analyzed to make the determination. For example, the determination can be made based on how the particular communication has been traditionally sent and/or received (*e.g.,* historical analysis), the type of communication (*e.g.*, voice, image, text, ...), as well as other parameters relating to the communication, the sender, and/or the receiver.

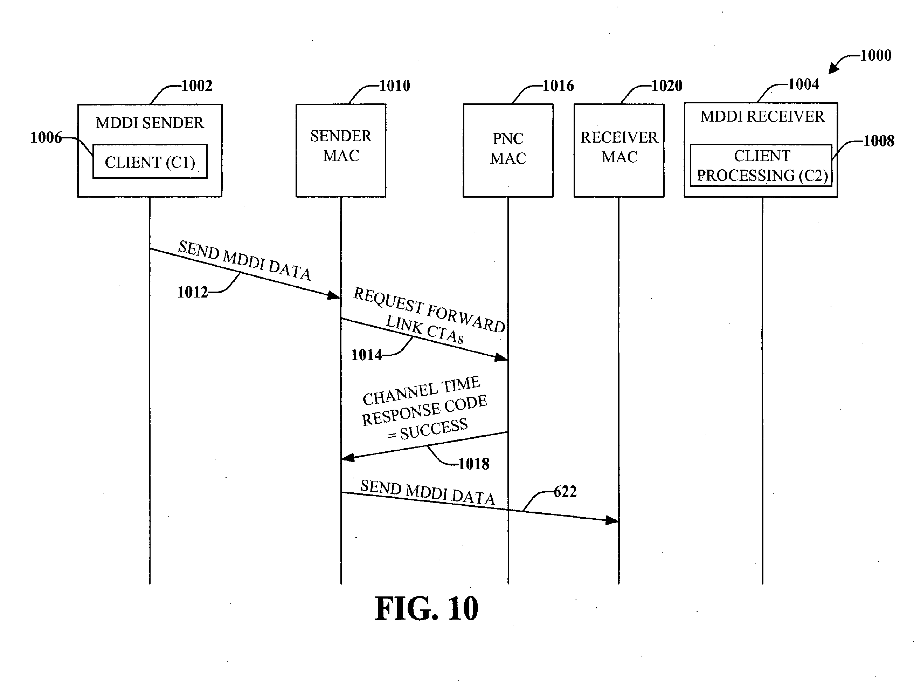

**Fig. 10** illustrates an exemplary forward link MDDI data transfer 1000 in low-overhead mode in accordance with the various embodiments presented herein. One type of mode for an MDDI sender 1002 to send data to an MDDI receiver 1004 can be a low overhead mode. In this mode, a packet sent wirelessly is optimized for channel allocation time, which is the time it takes for data to be sent from either direction (*e.g.*, forward or reverse). MDDI sender 1002 can include a portion of a client (C1) 1006 and MDDI receiver 1004 can include a portion of the client processing (C2) 1008.

An MDDI client (C1) 1006 can place the data to be sent in a buffer, such as on a UWB modem. The data to be sent should exclude unnecessary packets, such as fill packets and round trip delay packets, for example. The MDDI data is sent to a sender MAC 1010, as illustrated at 1012. Sender MAC 1010 (or UWB MAC) may periodically or continuously request at least one CTA from MDDI sender 1002 to MDDI receiver 1004 based on, for example, the size of the buffer.

Sender MAC 1010 can request, at 1014, forward link CTAs (*e.g.*, periodically or continuously) from a piconet controller (PNC) MAC 1016. PNC MAC 1016 can respond to sender MAC 1010 with a channel time response code at 1018. This response code can indicate whether the data has been communicated successfully. After a successful channel time response code is received, sender MAC 1010 can send the MDDI data to a receiver MAC 1020, as indicated at 1022.

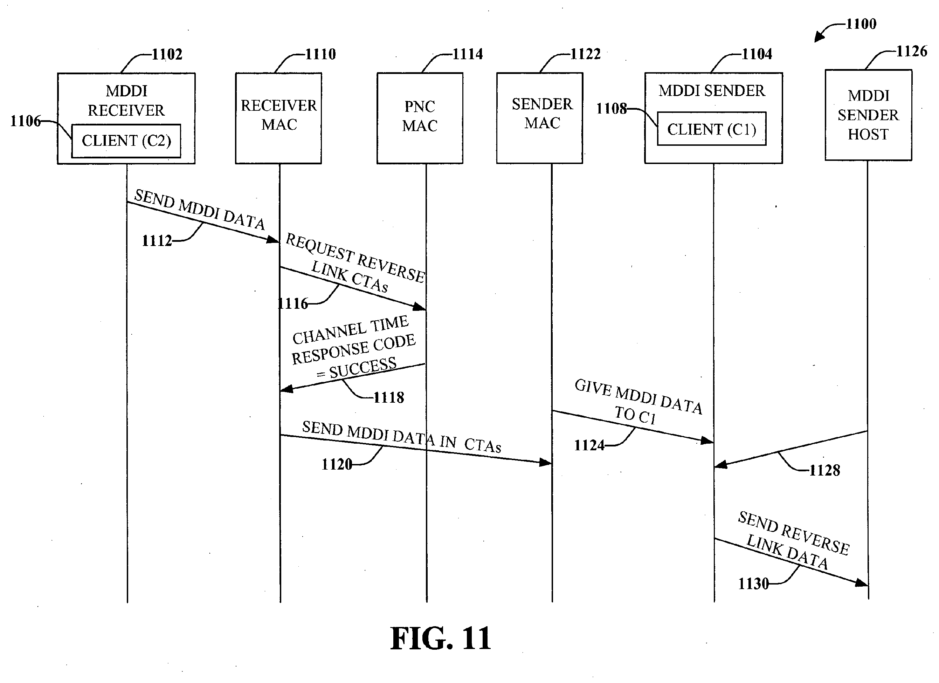

**Fig. 11** illustrates an exemplary reverse link MDDI data transfer 1100 in low-overhead mode in accordance with the various embodiments presented herein. An MDDI receiver 1102 can initiate, over a reverse link, communication intended for an MDDI sender 1104. MDDI receiver 1102 can include a portion of client (C2) 1106 and MDDI sender 1104 can include a portion of client (C1) 1108.

MDDI receiver 1102 can send MDDI data to a receiver MAC 1110, as indicated at 1112. Receiver MAC 1110 can request from a PNC MAC 1114 reverse link CTAs, at 1116. The request can correspond to the data that should be sent in the reverse direction. PNC MAC 1114 can respond, at 1118, with a channel time response code. Receiver MAC 1110 can, at 1120, send MDDI data in CTAs to sender MAC 1122. As indicated at 1124, sender MAC 1122 may have sent or given MDDI data to client (C1) 1108, at 1124, at some time before or at substantially the same time as receiving the MDDI data from receiver MAC 1110. A MDDI sender host 1126 can send and/or receive at least one reverse link encapsulation every frame, as indicated at 1128 and 1130. The reverse link data can be sent proactively, without waiting for a data request. The client can specify the number of bytes it needs to send on the reverse link in the current frame. The host 1126 can correspondingly allocate the request in the reverse link encapsulation packet.

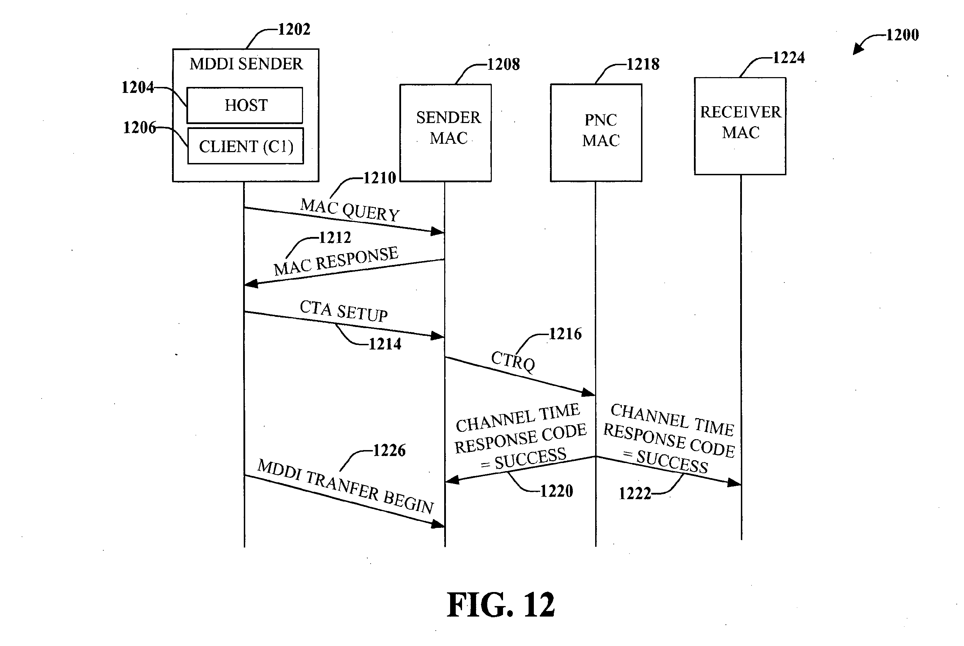

**Fig. 12** illustrates a low-latency mode MDDI connection setup 1200 in accordance with the various embodiments presented herein. In low-latency mode, channel allocation time can be ascertained based on an inference derived from data contained in packets in both the forward direction and the reverse direction. A MDDI sender 1202 can include a host 1204 and a portion of a client (C1) 1206. During an initialization phase, a UWB modem on the sender 1202 can send a MAC query, at 1210, to a sender MAC 1208. A MAC query is a query sent to find out the rate supported by the MAC and retransmission statistics. Sender MAC 1208 can respond to the query at 1212. This response can be a MAC response that indicates the rate supported by the MAC retransmission statistics.

A MAC Query Packet is sent by the host to query MAC information on the sender/receiver side. A Packet Length field is two bytes that contain a 16 bit unsigned integer that specifies the total number of bytes in the packet not including the packet length field. A Packet Type field is two 2 bytes that contain a 16 bit unsigned integer. A packet type of 151 identifies the packet as a MAC query packet. A ClientID is bytes that contain a 16 bit unsigned integer reserved for ID of the destination client (C2). The MAC Query Parameters field is two bytes and a CRC field is two bytes that contain a 16 bit CRC of all bytes in the packet including the Packet Length.

Sender 1202 requests a CTA setup 1214 for $m$ msec in the forward direction and a CTA for $n$ msec in the reverse direction. The expected ratio of traffic in the forward and reverse directions should be $m : n$. At 1216, a channel time request (CTRq) is sent to a PNC Mac 1218. A channel time response code can be sent in the reverse direction, shown at 1220, and in the forward direction, shown at 1222 and sent to a receiver MAC 1224. MDDI sender 1202 can begin an MDDI transfer, as illustrated at 1226.

The duration corresponding to the MDDI forward link transfer rate of $R_{f\text{-mddi}}$ is $m$ sec, and when $T$ is the super-frame duration determined by the latency constraints of the application, the following formula applies:

$$m + n < T_{CTAP} < T$$

In the low latency mode, the reverse link data can be sent during the CTAs reserved in the reverse direction. Depending on the time of arrival of reverse link data in relation to the MAC super frame, the transfer can have a maximum latency expressed as:

$$T_{rl} = ceil[\{k * ( N / R_1 + RIFS + H / R_2) + SIFS + T_{ACK}\} / n] * T$$

where $k$ is the average number of retransmissions experienced by a MAC frame. $N$ is the size of the reverse link packet that should be sent and $n$ is the reverse link CTA duration in each super frame. $R_1$ is the physical layer transmission rate of the MDDI data (MAC payload). $R_2$ is the physical layer transmission rate of the PHY, MAC headers and the preamble. $H$ is the size of the MAC plus the size of PHY header plus the size of preamble. $SIFS$ is the short inter-frame spacing duration. $RIFS$ is the retransmission inter-frame spacing duration. $T_{ACK}$ is the duration of transmission of the ACK. $T$ is the super-frame duration. For explanation purposes, it is assumed that the ACK policy is Imm-ACK. The latency of the forward link packets, $T_{fl}$, can be determined accordingly. Given the application latency constraints in forward and reverse links, the time duration of the MAC frame can be derived accordingly. For example, various algorithms, methods, and/or techniques can be employed to derive the time duration of the MAC frame and/or the latency of the forward link packets.

In view of the exemplary systems shown and described, methodologies, which may be implemented in accordance with one or more embodiments are provided. While, for purposes of simplicity of explanation, the methodologies are shown and described as a series of acts (or function blocks), it is to be understood and appreciated that the methodologies are not limited by the order of acts, as some acts may, in accordance with these methodologies, occur in different orders and/or concurrently with other acts from that shown and described herein. Moreover, not all illustrated acts may be required to implement the following methodologies. It is to be appreciated that the various acts may be implemented by software, hardware, a combination thereof or any other suitable means (*e.g.* device, system, process, component) for carrying out the functionality associated with the acts. It is also to be appreciated that the acts are merely to illustrate certain aspects presented herein in a simplified form and that these aspects may be illustrated by a lesser and/or greater number of acts. Those skilled in the art will understand and appreciate that a methodology could alternatively be represented as a series of interrelated states or events, such as in a state diagram.

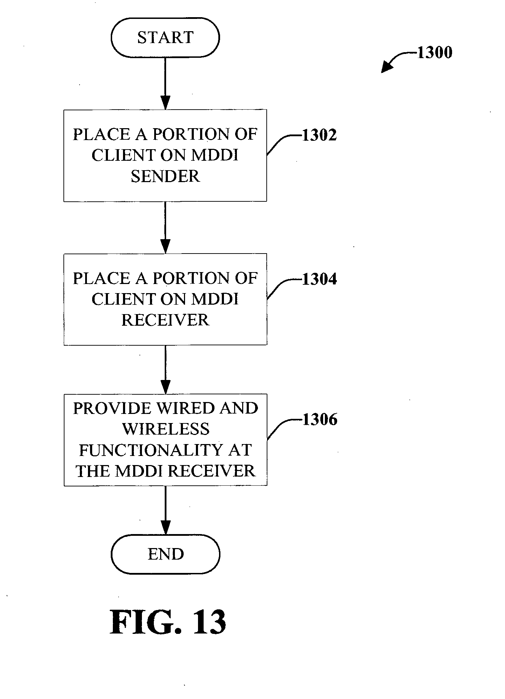

With reference now to **Fig. 13,** illustrated is a methodology 1300 for configuring a traditionally wired device to communicate through a wired protocol and/or a wireless protocol. At 1302, a first portion of a client is placed on an MDDI sender. The MDDI sender can be wireless and can be connected to a data source. The MDDI sender can also include an MDDI host connected or interfaced to the client portion by, for example, a traditional wired MDDI link.

At 1304, a second portion of the client is placed on an MDDI receiver, which can be a wireless MDDI receiver. The MDDI receiver can be connected to a device, which can be, for example, a display. The portion of the client placed on the MDDI sender and the portion of the client placed on the MDDI receiver are distinct portions of the same client. It should be noted that the respective portions of the client can be portions implemented by a processor, software or combination thereof (*e.g.*, firmware).

Both a wired functionality and a wireless functionality are provided, at 1306. This functionality is included on the MDDI receiver, enabling the MDDI receiver to communicate through the wired functionality, the wireless functionality, or both functionalities.

By way of example and not limitation, an MDDI receiver can be a mobile device that may receive a communication, such as a movie that is displayed on a CRT screen or display. The mobile device may also be connected to a wall-mounted display, allowing the movie to be displayed on the wall so that others can view the imagery. If the mobile device is multi-functional, it can broadcast the movie on the display and can at substantially the same time receive or send a voice communication, different from the voice communication associated with the movie. Thus, a user of the mobile device may conduct a communication separate from the movie. An example where this might be utilized is when a user's children are watching a movie and the user wants to answer the phone and walk away. Thus, the movie can be displayed through a wired functionality and at substantially the same time the user can communicate through the wireless functionality.

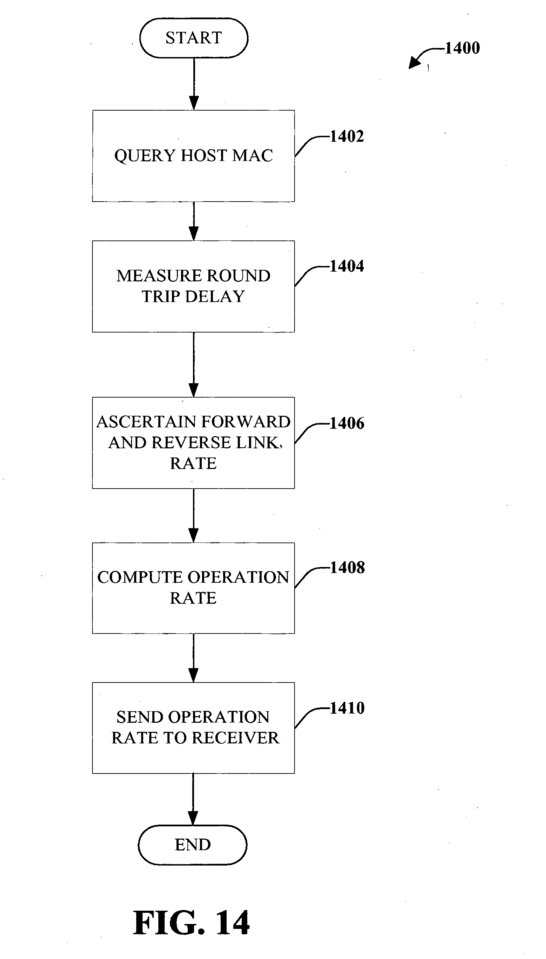

**Fig. 14** illustrates a methodology 1400 for determining an operation rate according to the one or more disclosed embodiments. In a wireless MDDI, for example, the MDDI operation rate depends, in part, on the rate of the wireless link. The method 1400 for determining an operation rate begins, at 1402, where a host MAC is queried for an available application data rate (*e.g.*, the application data rate that the MAC provides). The query can be requested by an MDDI host, for example.

At 1404, a round trip delay is measured. The round trip delay measurement can be utilized, at 1406, to determine or ascertain a forward link rate and a reverse link rate. According to some embodiments, the round trip delay measurement can be specified in a wired MDDI protocol that should be used.

An operation rate is computed at 1408. The operation rate can be computed based in part by comparing the forward link rate and the reverse link rate and determining which is the minimum of the two rates. The minimum of these two rates can be designated as the operation rate. In some embodiments, the minimum of these two rates (forward link rate and reverse link rate) can further be compared to both the maximum capacity of an MDDI host and the maximum capacity of an MDDI client (C1). The minimum or lowest rate based on this comparison is assigned as the operation rate.

There should be a minimum allowable rate $R_{min}$, which can be established or predetermined based on communication parameters. If the computed operation rate is lower than the minimum allowable rate, adjustments can be made to increase the rate. At 1410, the operation rate is communicated or sent to a receiver (*e.g.,* MDDI receiver) to notify the receiver the rate at which the communication will proceed.

In the above methodology 1400, for example, a transmitter can query the host MAC through a query module. The transmitter can further measure the round trip delay, ascertain forward and reverse link rate, and compute the operation rate utilizing a measurement module. The transmitter can also send the operation rate to the receiver utilizing a communication component. It should be understood that the above are for example purposes only and other components can be utilized in connection with the one or more embodiments presented herein.

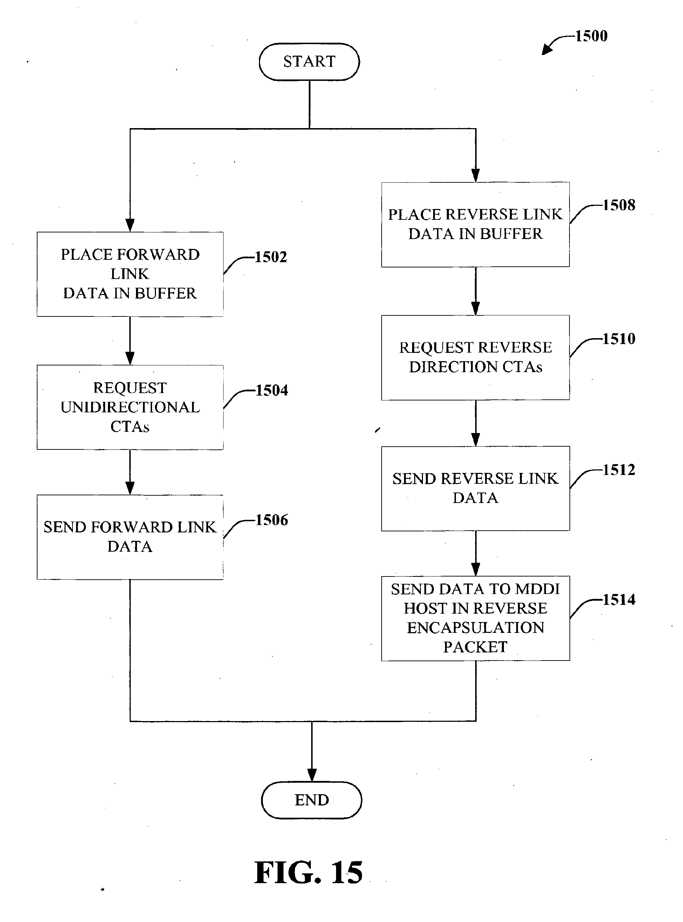

Referring now to **Fig. 15,** illustrated is a methodology 1500 for communicating in low overhead mode according to the various embodiments presented herein. The forward link is shown on the left side of the figure and the reverse link is shown on the right side of the figure.

At 1502, forward link data is placed in a buffer. Excluded from the data placed in the buffer can be unnecessary data such as fill packets and/or round trip delay packets. This data can be placed in the buffer by an MDDI client (C1) on an MDDI sender, for example. At 1504, unidirectional CTAs are requested (e.g., periodically or continuously). An UWB MAC can request this information from the MDDI sender to a receiver based on, for example, the size of the buffer.

The forward link data can be sent, at 1506.

In the reverse direction, a host sends at least one reverse link encapsulation packet every frame. A client (*e.g.*, receiver) can specify the number of bytes that should be sent on the reverse link in the current frame. The host (*e.g.*, sender) can allocate the request in a reverse link encapsulation packet. At 1508, reverse link data that should be sent is placed in a buffer by, for example, an MDDI client (C2). The buffer can be located on a UWB modem of an MDDI receiver. A request for reverse direction CTAs is sent, at 1510, by, for example, an UWB modem on the MDDI receiver side. The request can be for those CTAs in the reverse direction corresponding to the data that should be sent in the reverse direction.

An MDDI client on the receiver (C2) can send reverse link data to the client on the sender (C1) proactively, at 1512. As illustrated, at 1514, an MDDI client on the sender (C1) sends the data it has to the MDDI host in the reverse encapsulation packet.

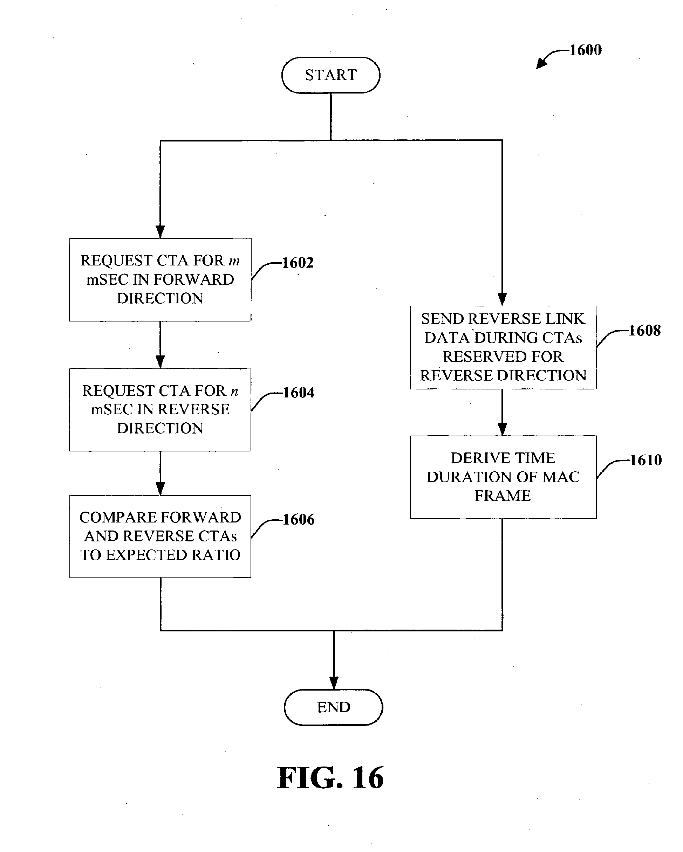

**Fig. 16** illustrates a methodology 1600 for communicating in low latency mode according to the various embodiments presented herein. The forward link is shown on the left side of the figure and the reverse link is shown on the right side of the figure. During an initialization phase in low latency mode, a UWB modem on the sender, for example, requests, at 1602, a CTA for $m$ msec in the forward direction. At 1604, a CTA request for $n$ msec is sent in the reverse direction. A comparison of the forward and reverse CTAs received in response to the requests is made, at 1606. The expected ratio of traffic in the forward and reverse directions is $m : n$. It should be noted that $m$ msec is the duration corresponding to the MDDI forward link transfer rate of $R_f$ mddi and:

$$(m + n) < T_{CTAP} < T$$

where $T$ is the super-frame duration, which can be determined by the latency constraints of the application.

In the reverse direction during a low latency mode, the reverse link data is sent, at 1608, during the CTAs reserved in the reverse direction. At 1610, a time duration of the MAC frame can be derived from the application latency constraints in the forward and reverse links. In the following equation, $k$ is the average number of retransmissions experienced by a MAC frame. $N$ is the size of the reverse link packet that should be sent and $n$ is the reverse link CTA duration in each super frame. $R_1$ is the physical layer transmission rate of the MDDI data (MAC payload). $R_2$ is the physical layer transmission rate of the PHY, MAC headers and the preamble. $H$ is the size of the MAC and the size of PHY header and the size of the preamble. SIFS is the short inter-frame spacing duration. RIFS is the retransmission inter-frame spacing duration. $T_{ACK}$ is the duration of transmission of the ACK and $T$ is the super-frame duration. For explanation purposes, it is assumed that the ACK policy is Imm-ACK. The latency of the forward link packets, $T_{fl}$, can be determined accordingly utilizing various algorithms, methods, and/or techniques. Depending on the time of arrival of reverse link data in relation to the MAC super frame, the transfer can have a maximum latency expressed as:

$$T_{rl} = ceil[\{k * ( N / R_1 + RIFS + H / R_2) + SIFS + T_{ACK}\} / n] * T$$

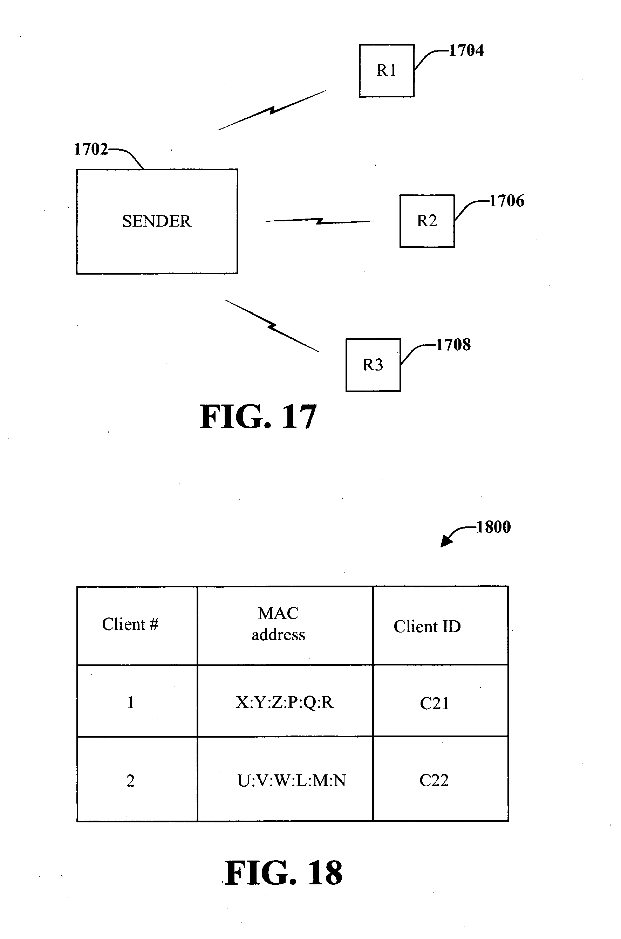

**Fig. 17** illustrates a single wireless sender associating with multiple wireless receivers in accordance with the disclosed embodiments. To fully appreciate the disclosed embodiments, various wired packets and their behavior in the wireless techniques will now be described. Filler packets are not generated in wireless communication of high rate data because filler packets were designed to maintain synchronization on the wired link and are, therefore, unnecessary with a wireless link.

A Client Capability Packet informs the host of the capabilities of the client. In a wired link, the client should send this packet after forward link synchronization. The client can also send the client capability packet when requested by the host through reverse link flags in a reverse link encapsulation packet. The client capability packet can contain fields that pertain to the link such as pre-calibration data rate capability, interface type capability, post-calibration data rate capability, and the like. This packet can also contain fields pertaining to external devices, such as a display device attached to the client. Such fields can include the number of alternate displays, a bitmap width, a bitmap height, display window width, display window height, color map size, and so forth.

During an association procedure in wireless communication, the receiver can send the Client Capability Packet as a response to an Association Response Packet sent by the wireless sender. The wireless receiver (C2) can also send an alternate display capability packet if it is associated with any alternate displays. The wireless receiver (C2) can send a Client Capability Packet to the sender when there is a change in statue of the external devices (*e.g.,* a new device being added, an existing device being removed, change of parameters of an existing device, and so on). Alternatively or additionally, the client capability packet can be sent periodically to assist in reliability of client capability packets.

A client request and status packet can be used to send information from a client to a host to allow the host to configure the host-to-client link in an optimum fashion. In a wired configuration, the client can send this packet to the host as a first packet in a reverse link packet. The client can, alternatively or additionally, send this packet to the host when the host requests it explicitly through a reverse link flags in a reverse link encapsulation packet.

In a wireless configuration, the wireless receiver may periodically send a Client Request and Status Packet to the wireless sender to indicate its CRC Error Count and also when there is a change in status of the external devices. The wireless receiver may also send a Client Request and Status Packet to the wireless sender requests it through the C2 flags field of a new C2 request packet.

With reference again to **Fig. 17,** each wireless sender 1702 (of which only one is illustrated) can associate or communicate with multiple wireless receivers, illustrates as receiver 1 (R1) 1704, receiver 2 (R2) 1706, and receiver 3 (R3) 1708. The sender 1702 and receivers 1704, 1706, 1708 can be MDDI sender(s) and/or MDDI receivers or other senders and receivers that can communicate high rate digital data wirelessly. Each receiver 1704, 1706, 1708 can have multiple displays (not shown) and devices (not shown). For example, each receiver can have sixteen displays, although more or less than sixteen can be associated with a single receiver.

For example, wireless devices, such as a wireless display, wireless mouse, wireless keyboard, and so forth, can have a wireless receiver, and each wireless device can be identified as a separate client. From the perspective of a host (*e.g.*, sender 1702), each of these clients can be identified by an unique client identification (Client ID). Therefore, Client C1 can have a Client ID of "0". Wireless receiver, such as receiver (R2) 1706, can send a client capability packet to the wireless (C2) sender 1702 when there is a change in the capabilities of the external devices connected to receiver (R2) 1706. Additionally or alternatively, each receiver can send a client capability packet periodically to ensure reliability.

Sender 1702 should maintain a device association table, such as table 1800 shown in **Fig. 18.** Table 1800 illustrates an association of a single wireless sender with multiple wireless receivers (*e.g.*, client). The packets intended for a different receiver clients can be forwarded to the respective devices based on the table. Table 1800 illustrates two clients (1 and 2). Associated with Client #1 is the MAC address X:Y:Z:P:Q:R, and a Client ID "C21". Associated with Client #2 is the MAC address U:V:W:L:M:N and the Client ID "C22". In such a manner, the sender can communicate with the appropriate receiver by accessing the look-up table 1800.

In order for a sender to communicate with a receiver, there should be device association. Either device (sender or receiver) can initiate the association process. For example, if a wireless sender is a phone and a wireless receiver is a projector/display, the phone (*e.g.*, sender) would typically initiate the communication. However, there are situations where a receiver would initiate the communication. Thus, there can be receiver initiated association or sender initiated association.

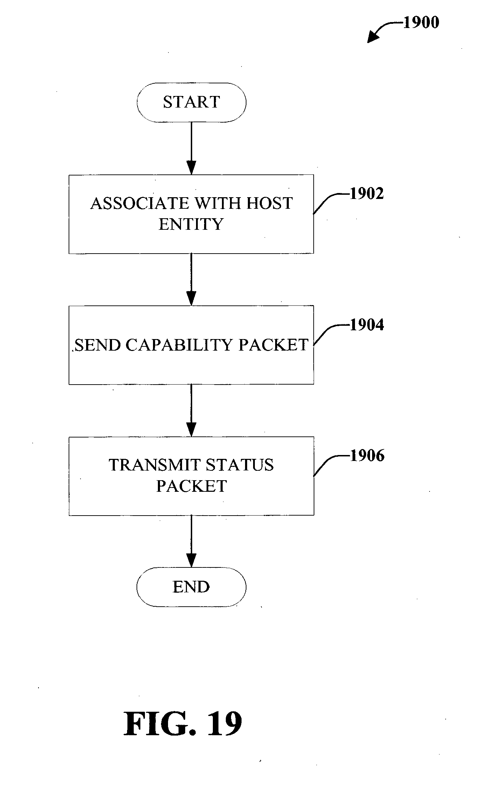

With reference now to the drawings, **Fig. 19** illustrates a method 1900 for wirelessly communicating digital data at a high rate, which can be initiated by a receiver. The method 1900 can facilitate wireless communication between a host entity (*e.g.*, sender) and one or more remote user interface client devices (*e.g.*, receivers). The wireless communication can include user interface data or other data.

When one or more remote user interface client devices (*e.g.*, wireless receiver) wishes to associate with a wireless sender (*e.g.,* host entity) method 1900 starts, at 1902, by associating with the host entity. Such association can include sending a packet requesting the association. The host entity can communicate wirelessly with more than one remote user interface client device at substantially the same time. Once association is established with the host entity, a capability packet is sent to the host entity, at 1904. The capability packet can include one or more capabilities of the remote user interface client device. At 1906, a status packet is sent to the host entity. The status packet can include link quality information.

In accordance with some aspects, a request is received from the host entity for an updated status packet. At substantially the same time as the response is received, the status packet can be updated and sent to the host entity in reply to the request. In other aspects, the updated status packet can be automatically sent either periodically or when a status change is detected.

The association between one or more remote user interface client devices and the host entity may be broken due to a communication failure, the devices moving out of range, or based on other factors. It may be determined that an association is broken if a host entity status packet is not received within a predetermined period. For example, at substantially the same time as a host entity status packet is requested, a timer can be started. The timer can be set up to track an interval from the time the request is sent. The interval can be predetermined and should be long enough to allow the request to be received at the host entity and for the host entity to respond. If the timer expires (*e.g.*, the response is not received within the predetermined interval), the one or more remote user interface client devices can be disassociated from the host entity.

Disassociation from the host entity can also occur if a communication between the devices should be stopped. If so, the one or more remote user interface client devices can disassociate from the host entity and enter a disassociation state. Disassociation can include sending a dissociation request to the host entity and receiving a dissociation response from the host entity. In accordance with some aspects, the dissociation response might not be received from the host entity, such as when there is a communication failure or if a link or association between the devices has been broken.

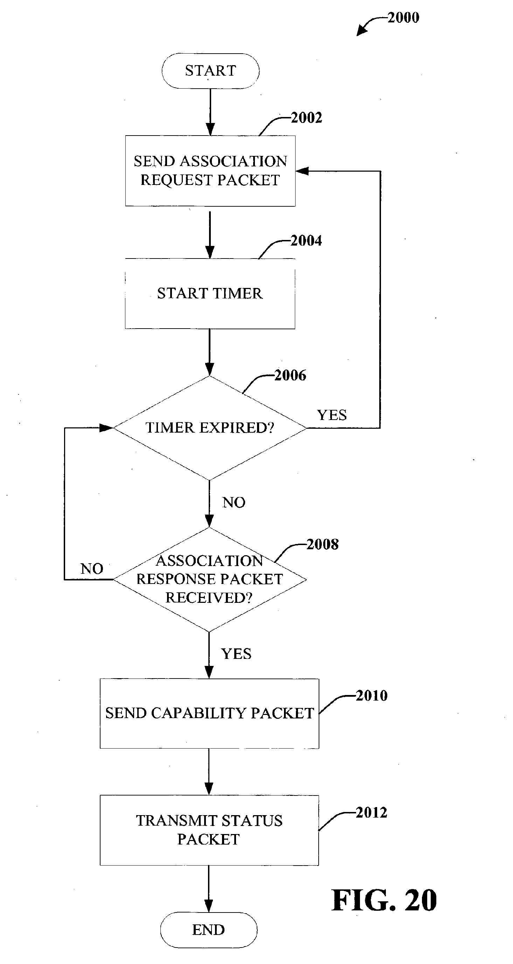

**Fig. 20** illustrates a method 2000 for communicating high rate digital data wirelessly. Method 2000 can start with a receiver-initiated association. To associate the device (*e.g.*, receiver) with the host entity, an Association Request Packet is sent, at 2002. The Association Request Packet can be sent for an association request by C2 when it desires to associate with the sender after power up of the device. The Association Request Packet can include a Packet Length, Packet Type, Device Parameters, Sender MAC Address, Receiver MAC Address and CRC fields. The packet length can be two bytes that contains a 16 bit unsigned integer that specifies the total number of bytes in the packet not including the packet length field. The Packet Type can be two bytes in length and contain a 16 bit unsigned integer. A packet type of 154 identifies the packet as an *association request packet.* Device parameters can be two bytes for device specific parameters. The sender MAC Address can be a six byte-MAC Address of the w-MDDI sender and the Receiver MAC Address - 6 bytes-MAC Address of the w-MDDI receiver. The CRC can be two bytes that contain a 16 bit CRC of all bytes in the packet including the Packet Length.

At substantially the same time as the association request packet is sent, the device can enter a "Sent Association Request" state and an association timer can be started, at 2004. The wireless sender should acknowledge the Association Request Packet and reply with an Association Response Packet before the association timer reaches a predetermined interval (*e.g.*, times out, expires). The Association Response Packet can include a Client ID that identifies the wireless receiver.

A determination is made, at 2006, whether the timer has expired. Since the underlying wireless medium may be unreliable, it is possible that the Association Response Packet or other packets can be lost. Therefore, if the Association Response Packet has not been received ("NO") before expiration of the timer, method 2000 continues, at 2006, with a determination whether the timer has expired. If, at 2006, it was determined that the timer had expired, method 2000 continues, at 2002 with a subsequent association request packet being resent. This can be recursive wherein a number of subsequent Association Request Packets can be sent up to a maximum number of times.

If the timer has not expired ("NO"), a determination is made, at 2008, whether the Association Response Packet has been received. If the determination, at 2008, is that the Association Response Packet has been received ("YES"), method 2000 continues, at 2010, and a Client Capability Packet is sent to the wireless sender acknowledging the Association Request Packet. A status packet or Client Capability Packet can be transmitted, at 2012. The Client Capability Packet can be sent when the wireless receiver receives an Association Response from a wireless sender. After sending the Client Capability Packet, the wireless receiver can enter an Associated state and the associated wireless receiver can enter an Associated state. In such a manner there is a three-way handshake association established. If the Association Request packet, Association Response Packet and/or Client Capability Packets are lost, they can be retransmitted if the wireless link is stable. Otherwise, the wireless sender and wireless receiver do not become associated (*e.g.*, they remaining a dissociated state).

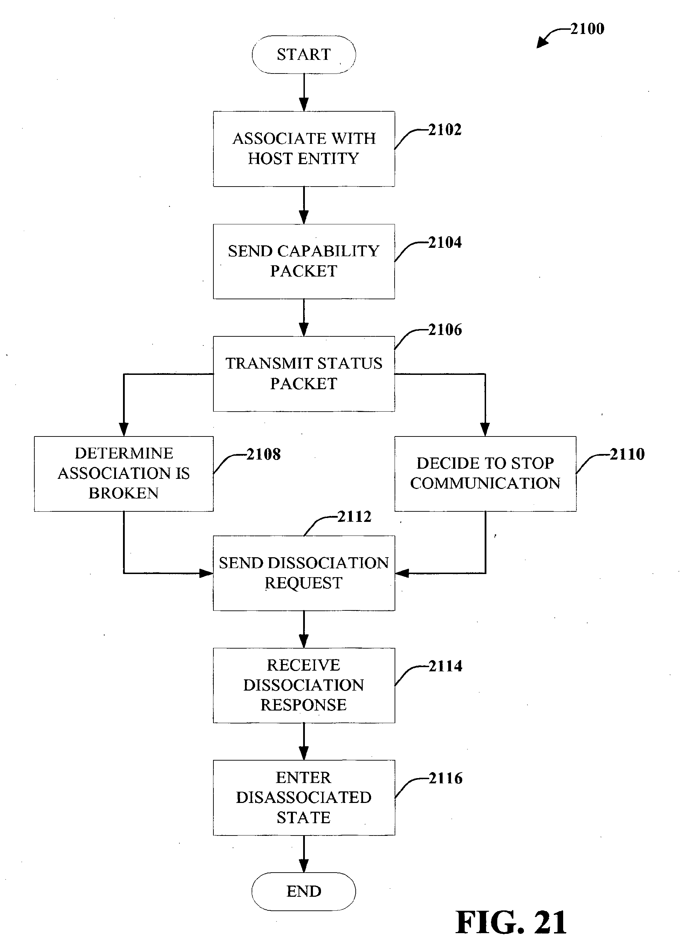

**Fig. 21** illustrates a method 2100 for receiver initiated dissociation between a user device (*e.g.*, receiver) and a host entity (*e.g.*, sender). The method 2100 starts, at 2102, with associating the user device with a host entity. At substantially the same time as association with the host entity is established, a capability packet is sent, at 2104. The capability packet can include one or more capabilities of the user device. A status packet can be transmitted, at 2106. Such transmission of the status packet can be based on a request for the packet from the host entity, periodically, or when a status changes.

At 2108, a determination may be made that the association is broken and/or, at 2110, it may be decided to stop communication with the host entity. For example, the determination can be made if the wireless receiver does not receive a Sender MAC Response Packet from the wireless sender in a predetermined amount of time. A MAC Response Packet provides MAC statistics on the wireless receiver MAC, such as average number of retransmissions, packet error rate, and so forth. The packet contents can include a packet length, packet type, Client ID, average number of transmissions, frame error rate, physical layer rate, CRC. The MAC Response Packet can be two bytes in length that contains a sixteen bit unsigned integer that specifies the total number of bytes in the packet, not including the packet length field. The packet type is two bytes that contains a sixteen bit unsigned integer. A packet type of 150 identifies the packet as a MAC Response Packet. The client ID is two bytes that contains a sixteen bit unsigned integer. This is the Client ID of C1/C2 depending on which client is the originator of the packet. The average number of retransmissions can be two bytes and for each MAC frame transmitted in the reverse direction. The frame error rate can be two bytes and is the packet error rate seen in the forward direction. A physical layer rate can be two bytes and is the transmission rate on the physical layer. The CRC is two bytes that contains a sixteen bit CRC of all bytes in the packet including the packet length.

The Sender MAC Response Packet provides the MAC statistics on the wireless sender MAC like average number of re-transmissions, packet error rate and so forth to the wireless receiver. This packet is sent by the wireless sender acknowledging the MAC response Packet sent by the wireless receiver. The packet contains a Packet Length field of two bytes that contain a 16 bit unsigned integer that specifies the total number of bytes in the packet not including the packet length field. Also included is a Packet Type field of two bytes that contain a 16 bit unsigned integer. A packet type of 159 identifies the packet as a Sender MAC Response Packet. A Client ID is two bytes that contain a 16 bit unsigned integer. This is the Client ID of C2, the destination client. The Average number of retransmissions is the average number of retransmissions for every MAC frame transmitted on the reverse direction. A Frame Error Rate is the packet error rate seen in the forward direction. A Physical Layer Rate is the transmission rate on the physical layer. Also included in the packet is a CRC that is two bytes in length that contain a 16 bit CRC of all bytes in the packet including the Packet Length.

If either or both the association is broken or communication should be stopped, the user device should be dissociated from the host entity. Such dissociation can include, sending an explicit Dissociation Request Packet, at 2112, to the wireless sender. If there is still a communication link between the host entity and the user device (e.g., all communication has been lost), a Dissociation Response Packet is received from the wireless sender, at 2114. At substantially the same time as the dissociation response is received, the user device enters a dissociation state, at 2116.

The Dissociation Request Packet can be sent by C2 when it wants to dissociate with the wireless sender and to make a graceful exit. Included in the Dissociation Request Packet is a Packet Length field two 2 bytes in length that contain a 16 bit unsigned integer that specifies the total number of bytes in the packet not including the packet length field. A Packet Type field is two bytes that contain a 16 bit unsigned integer. A packet type of 156 identifies the packet as a *dissociation request packet.* A Client ID field is two bytes allocated for client ID of C2. The CRC field is two 2 bytes that contain a 16 bit CRC of all bytes in the packet including the Packet Length.

The Dissociation Response Packet is sent in response to the *dissociation request packet.* It has a Packet Length of 2 bytes that contain a 16 bit unsigned integer that specifies the total number of bytes in the packet not including the packet length field. A Packet Type is two 2 bytes that contain a 16 bit unsigned integer. A packet type of 157 identifies the packet as a *dissociation response packet.* A Client ID is two bytes allocated for client ID of C2 and a CRC field is two bytes that contain a 16 bit CRC of all bytes in the packet including the Packet Length.

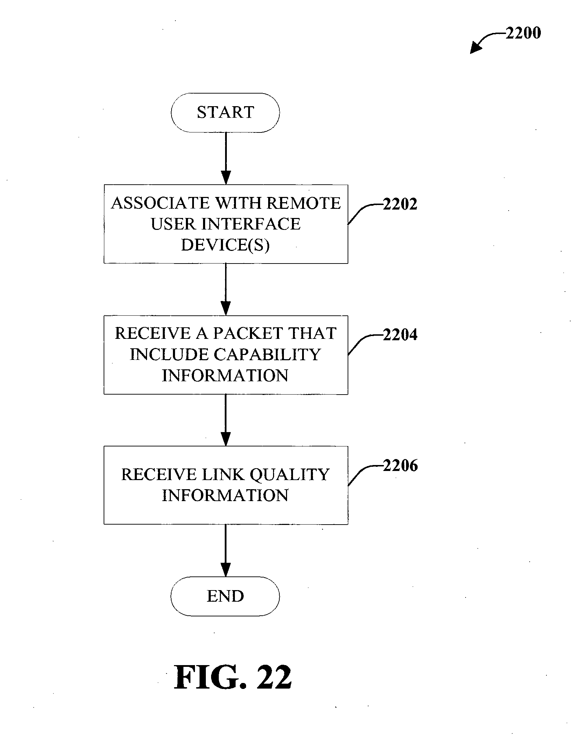

Referring now to **Fig. 22,** illustrated is a method 2200 for high rate wireless digital data communication between a sender at one or more remote receivers for user interface data. The sender initiates the association when it desires to associate with a particular wireless receiver. For example, if the wireless sender is a phone and the wireless receiver is a projector, the phone (e.g., wireless sender) would typically start the association process. Sender initiated association is similar to receiver initiated association.

Method 2200 can start, at 2202, when a sender is associated with one or more remote user interface devices through a sender initiated association. Such association can include sending a request to the receiver that an association be established between the devices. The receiver can respond to the request, indicating that the association is possible (e.g., that the receiver is not associated with another sender). At substantially the same time as the devices are associated, a packet that includes capability information is received, at 2204, from the remote user interface device and, at 2206, link quality information is received, such as on a reverse link. The information can be sent in response to a C2 Request Packet that can be sent by the wireless sender to the receiver requesting the receiver to send the client capability packet. The C2 can include Packet Length, Packet Type , C2 Client ID and C2 flags fields. The Packet Length field is two bytes that contain a 16 bit unsigned integer that specifies the total number of bytes in the packet not including the packet length field. The Packet Type is two bytes that contain a 16 bit unsigned integer. A packet type of 149 identifies the packet as a C2 request packet. The C2 Client ID field is two bytes that contain a 16 bit unsigned integer reserved for ID of C2. The C2 flags field is one 1 byte that contains an 8 bit unsigned integer that contains a set of flags to request information from C2. For example, if a bit is set to 1, then C1 requests the specified information from the client. If the bit is set to 0, then C1 does not need the information from C2. Bit 0 indicates C1 needs the client capability packet from C2. Bit 1 indicates C1 needs "Client Request and Status Packet" from C2. The CRC field is two bytes that contain a 16 bit CRC of all bytes in the packet including the Packet Length.

In some situations, the sender may initiate an association but the receiver may already be associated with a difference receiver or may not desire to associate with this sender. In this situation, an Association Denial Packet can be sent by Client (C2) as a reply to an association request when it does not want to associate with the w-MDDI Sender (after power up). The Association Denial Packet contains various fields including Packet Length, Packet Type, Sender MAC Address, Receiver MAC Address, and CRC. The Packet Length can be two bytes that contain a 16 bit unsigned integer that specifies the total number of bytes in the packet not including the packet length field. The Packet Type can be two bytes that contain a 16 bit unsigned integer. A packet type of 154 identifies the packet as an *association request packet.* The Sender Mac Address can be a six byte MAC Address of the W-MDDI Sender and the Receiver MAC Address can be a six byte MAC Address of the W-MDDI Receiver. The CRC is two bytes that contain a 16 bit CRC of all bytes in the packet including the Packet Length.

Another packet that can is sent is a MAC CTA Setup Packet is used by the host to setup CTAs in the forward and reverse directions. This can be used in the low-latency mode of operation of w-MDDI with IEEE 802.15.3 MAC. If the MAC protocol allows the sender MAC to set up CTAs in the reverse direction, then this packet will be dropped at the sender. Else, it will be forwarded to the receiver. The MAC CTA Setup Packet contents include a Packet Length field that is two bytes that contain a 16 bit unsigned integer that specifies the total number of bytes in the packet not including the packet length field. A Packet Type field is two bytes that contain a 16 bit unsigned integer. A packet type of 152 identifies the packet as a CTA setup packet. C1ClientID field is two bytes that contain a 16 bit unsigned integer reserved for ID of the host -- 0. A C2ClientID field is two bytes that contain a 16 bit unsigned integer reserved for ID of C2. Forward CTA parameters are CTA parameters for data transfer in the forward direction and Reverse CTA parameters -- CTA parameters for data transfer in the reverse direction.

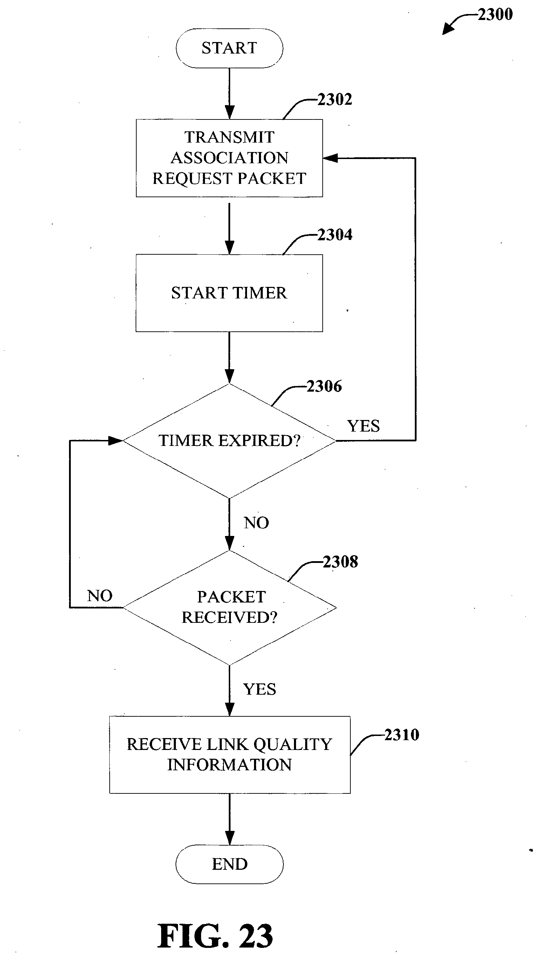

**Fig. 23** illustrates a method 2300 for high rate wireless data communication between a sender and a remote receiver. Method 2300 illustrates a sender initiated association and starts, at 2302, with transmission of a Sender Association Request Packet to a remote receiver. The Sender Association Request Packet is sent for association request by the sender when it wants to associate with a particular MDDI Receiver (after power up). The Sender Association Request Packet include a Packet Length of two bytes that contain a 16 bit unsigned integer that specifies the total number of bytes in the packet not including the packet length field and a Packet Type of two bytes that contain a 16 bit unsigned integer. A packet type of 158 identifies the packet as an *association request packet.* Also included is a Receiver MAC Address that is six bytes and includes the receiver MAC address and a Sender MAC Address that is bytes of the sender MAC address. A CRC field is two bytes that contain a 16 bit CRC of all bytes in the packet including the Packet Length.

At substantially the same time as the first association request packet is sent, the sender enters a "Sent Sender Association Request" state and a timer (*e.g.*, Association timer) or other tracking means can be initiated, at 2304. The interval of time between the transmission of the first association request packet and receipt of a response from the remote receiver, such as an Association Request Packet, is tracked and, at 2306, a determination is made whether a predefined interval of time has been exceeded (*e.g.*, the timer has expired). If the timer has expired ("YES"), it indicates that the Association Request Packet was not received from the remote sender and method 2300 continues, at 2302, where a subsequent association request packet is sent. Any number of subsequent Sender Association Request packets can be sent up to a maximum number (*e.g., max_sender_association_retry)* number of times. If the timer has not expired ("NO"), a determination is made, at 2308, whether a Association Request Packet is received.

If the determination, at 2308, is that the Association Request Packet has not been received ("NO"), the method 2300 continues, at 2306, until either the timer expires or the Association Request Packet is received. If the Association Request Packet has been received ("YES"), an Association Response Packet can be sent that provides a Client ID to the remote device.

The Association Response Packet is sent in response to the *Association Request Packet* sent by C1. This packet provides C2 the Client ID and Display/device ID. This is part of the three-way handshake association. The Association Response Packet contains a Packet Length, a Packet Type, a Client ID, and a CRC. The Packet Length is two bytes that contain a 16 bit unsigned integer that specifies the total number of bytes in the packet not including the packet length field. The Packet Type is two bytes that contain a 16 bit unsigned integer. A packet type of 155 identifies the packet as an *association response packet.* The Client ID is two bytes allocated for client ID of C2 and the CRC is two bytes that contain a 16 bit CRC of all bytes in the packet including the Packet Length.

The sender may also start a timer, such as an Association Response timer, at substantially the same time as sending the Association Response Packet. The receiver should reply with a Client Capability Packet and/or link quality information, at 2310, on a reverse link. If the Association-Response timer expires, the wireless sender resends the Association Response packet a maximum (*e.g.*, association_retry) number of times. The Sender Association Request, Association Request, Association Response and Client Capability can constitute a four-way handshake procedure. Alternate display information may also be received from the remote device

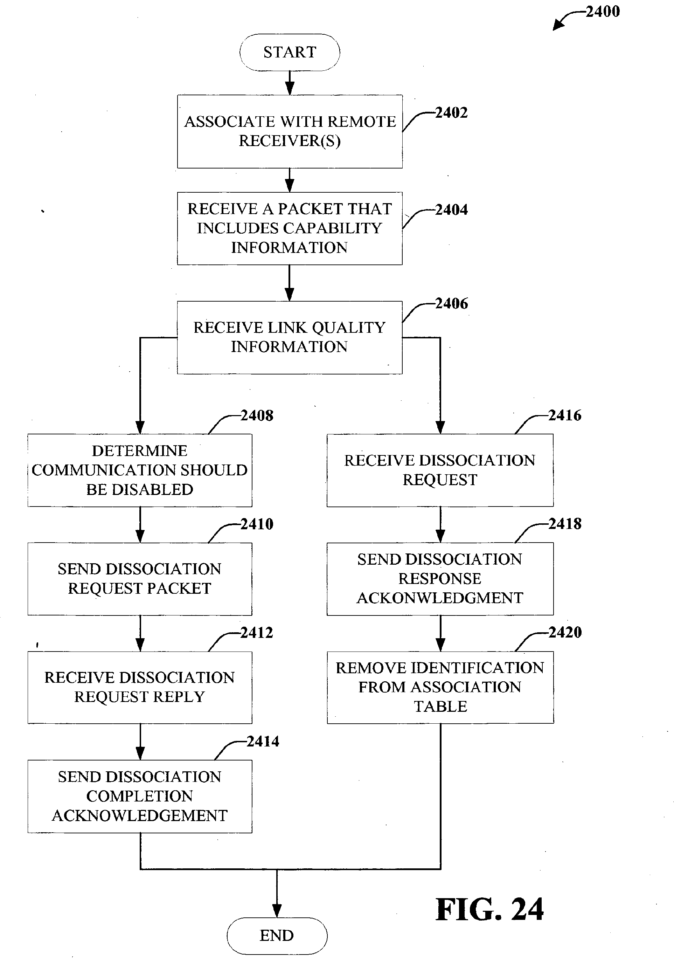

**Fig. 24** illustrates a method 2400 for selective disassociation between a sender and a remote receiver. At 2402, an association between a sender and a remote receiver can be established. A packet that includes capability of the remote receiver can be received, at 2404, and link quality information can be received, at 2406. In addition, a MAC address of the sender and an identification of the remote receiver can be included in a device association table associated with the sender.

In some situations, it might be necessary to discontinue the association between the remote receiver and the sender and a determination can be made, at 2408, that the communication between the sender and the remote receiver should be disabled. For example, if a wireless sender does not receive a MAC Response Packet from a receiver in a predetermined interval (*e.g., mac_response_fail_time*) msec, it can declare the receiver as dissociated and at 2410, a Sender Dissociation Request Packet is sent to the receiver. A reply to the dissociation request (*e.g.*, Dissociation Request) is received from the receiver, at 2412. A dissociation completion acknowledgment (*e.g.*, Dissociation Response) can be sent, at 2414, to complete the dissociation procedure.

In some aspects, a dissociation request can be explicitly received, at 2416, from a remote receiver. At 2418, a dissociation response acknowledgement *e.g.,* Dissociation Response) is sent. At 2420, an identification of the dissociated device is removed from an association table.

The Sender Dissociation Request Packet is sent by the wireless sender initiating the Dissociation. It includes a Packet Length field of two bytes that contain a 16 bit unsigned integer that specifies the total number of bytes in the packet not including the packet length field. A Packet Type field of two bytes that contain a 16 bit unsigned integer. A packet type of 157 identifies the packet as a *dissociation response packet.* A Client ID is two 2 bytes allocated for client ID of C2. A CRC field is two bytes that contain a 16 bit CRC of all bytes in the packet including the Packet Length.

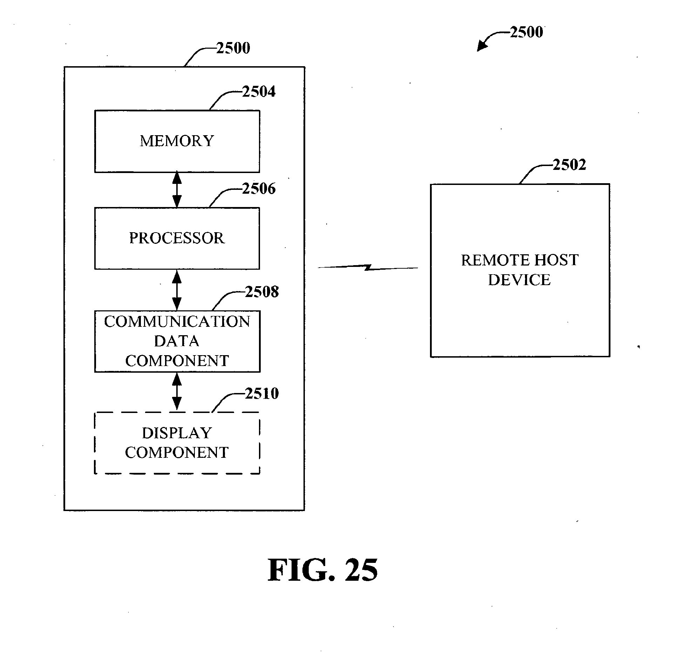

**Fig. 25** illustrates an apparatus 2500 that initiates device association in accordance with the various embodiments. Apparatus 2500 can be a receiver configured to communicate high rate digital data and which desires to associate with a wireless sender or remote host device 2502. Apparatus 2500 can include a memory 2504 that can be configured to store information. Such stored information can include a MAC address associated with the apparatus 2500 and/or a Client ID (as received in an Association Response Packet). For example, at substantially the same time as being associated with a particular wireless sender, the wireless receiver can store the MAC address of the sender or remote host device 2502 with which the apparatus 2500 is associated.

Also included in apparatus 2500 can be a processor 2506 that can be configured to analyze information stored in memory 2504. Processor 2506 can further selectively associate the apparatus 2500 with the remote host device 2502. In accordance with some aspects, processor 2506 can associate apparatus 2502 with remote host device 2502 at substantially the same time as receipt of an associated request packet from remote host device 2502. However, if a response packet is not received from the remote host device 2502 after a predetermined interval and a maximum number of sent association requests have been exceed, the processor 2506 does not associated the apparatus 2500 with the remote host device 2502.

Apparatus 2500 can further include a communication data component 2508 that can be configured to update a MAC Response Packet with apparatus MAC statistics for transmission to the remote host device 2502. After entering an associated state, the wireless receiver can periodically, such as each *mac_response_time* msec, send a MAC Response Packet. The host device 2502 can respond with a packet that acknowledges reception of the MAC Response Packet sent by apparatus 2500. If apparatus 2500 does not receive a response after a predetermined interval of time (*e.g.*, *mac_response_fail_time* msec duration), apparatus 2500 might infer that it has been dissociated from the host device 2502 and stops sending the MAC Response Packet. The apparatus 2500 and host device 2502 may become dissociated, as described above. In some embodiments, apparatus 2500 can send a MAC Response Packet when specifically requested to do so by the host device 2502.

The apparatus 2500 and the remote host device 2502 may become disassociated, either intentionally or unintentionally. For example, a communication link may be lost between the apparatus 2500 and the remote user device 2502 due to a communication failure, the devices moving out of range of each other or for other reasons. For example, if a dissociation request packet is received from the remote host device 2502, the processor dissociates the apparatus 2500 from the host device 2502 at substantially the same time as receipt of the request. In another example, if a status packet is not received from the remote host device 2502 in response to the transmitted updated MAC response packet, the processor 2508 will selectively dissociate based on inference that the apparatus 2500 and the host device 2502 are no longer to be associated.

In accordance with some aspects, apparatus 2500 can include a display component 2510 that can be configured to compile one or more alternate display information. The alternate display information can be associated with the apparatus 2500. The display component 2510 can further be configured to convey the one or more alternate display information to the remote host device 2502. For example, if there are alternate displays associated with the wireless receiver, an Alternate Display Capability Packet can be sent to the remote host device 2502.

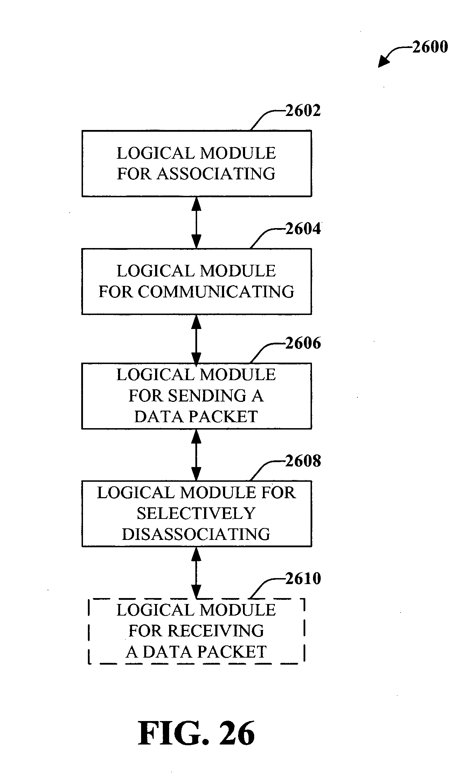

**Fig. 26** illustrates an apparatus 2600 for wirelessly communicating high rate user interface data with a remote sender. Apparatus 2600 can include a logical module for associating at least one receiver with a remote sender 2602. Also included in apparatus can be a logical module for communicating 2604 at least one capability information of the at least one receiver wirelessly to the remote sender. Apparatus 2600 can further include a logical module for selectively disassociating with the remote sender 2606. In accordance with some aspects, apparatus 2600 can further includes a logical module for receiving a data packet 2608. The data packet can be a link quality data packet that is received from the remote sender in response to the one or more link quality data packets.

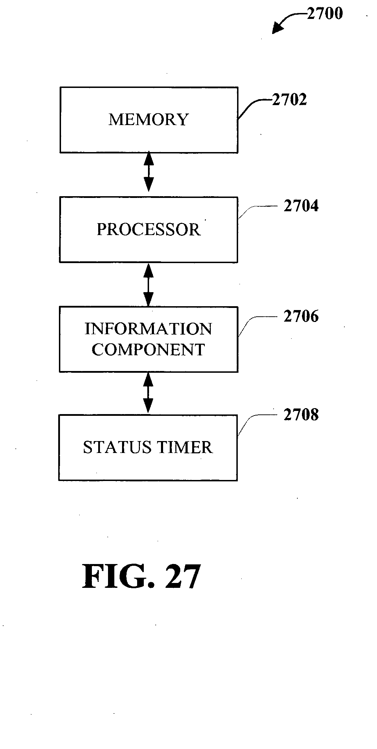

With reference now to **Fig. 27,** illustrated is an apparatus 2700 that can be configured to wirelessly communicate high rate user interface data. The apparatus 2700 can include a memory 2702 that can be configured to store information related to an identification of a remote user interface device, such as a Client ID assigned to the remote device. A processor 2704 can be configured to selectively associate with one or more remote user interface devices based in part on the information stored in memory 2702. Apparatus 2700 can also include an information component 2706 that can be configured to analyze at least one capability of the one or more remote user interface devices. The capability can be received in a client capability packet. Information component 2706 can further be configured to analyze a link quality information data received in a status update packet.

In accordance with some aspects, apparatus 2700 can include a status timer 2708 that can be configured to determine if a response to the sender association request is received within a predefined interval. If the response is not received within the predefined interval, a subsequent sender association request can be sent by processor 2704.

If dissociation from the remote user interface device is desired, processor 2704 can selectively dissociate the remote device. For example, processor 2704 may selectively dissociate if link quality information data indicates that the quality of a communication link has fallen below a predetermined threshold.

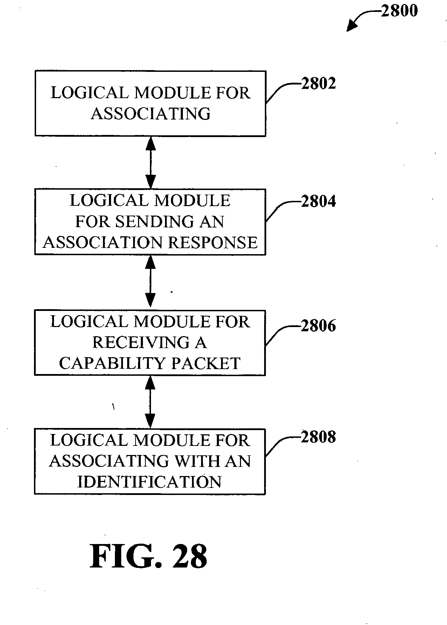

Referring now to **Fig. 28,** illustrated is an apparatus 2800 for wirelessly communicating user interface data at a high rate. Apparatus 2800 includes a logical module for associating 2802 with another device, such as one or more remote user interface devices. Such association can be selective.

Also included in apparatus 2800 is a logical module for sending an association response 2804. The association response can contain a client identification for each respective remote user interface device. A logical module for receiving a capability packet 2806 is included in apparatus. Also included is a logical module for associating with an identification 2808. Such association can be based partially on a capability included in the first capability packet.

In accordance with some aspects, apparatus 2800 can include a logical module for determining if the capability packet is received within a predefined interval (not shown) and a logical module for sending a second request for the capability packet (not shown). The second request can be sent if the capability packet was not received within the predefined interval.

In accordance with other aspects, apparatus 2800 can include a logical module for determining if an association with one or more remote user® interface devices should be stopped. Also included in such embodiments, can be a logical module for selectively dissociating the one or more remote user interface device if the association should be stopped.

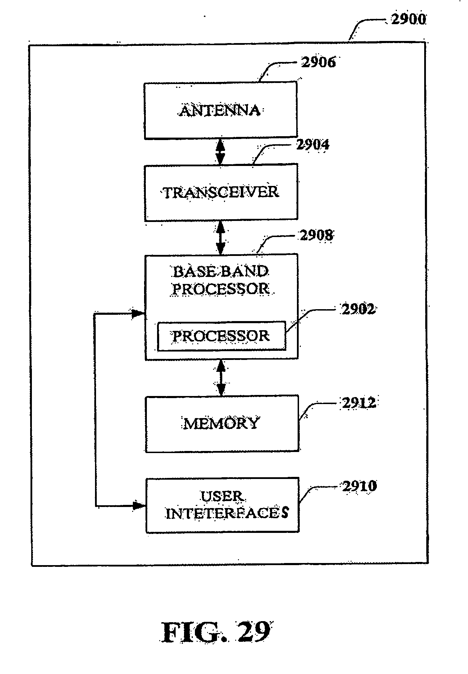

With reference now to **Fig. 29,** illustrated is a conceptual block diagram of a possible configuration of a terminal 2900. As those skilled in the art will appreciate, the precise configuration of the terminal 2900 may vary depending on the specific application and the overall design constraints. Processor 2902 can implement the systems and methods disclosed herein.

Terminal 2900 can be implemented with a front-end transceiver 2904 coupled to an antenna 2906. A base band processor 2908 can be coupled to the transceiver 2904. The base band processor 2908 can be implemented with a software based architecture, or other type of architectures. A microprocessor can be utilized as a platform to run software programs that, among other functions, provide control and overall system management function. A digital signal processor (DSP) can be implemented with an embedded communications software layer, which runs application specific algorithms to reduce the processing demands on the microprocessor. The DSP can be utilized to provide various signal processing functions such as pilot signal acquisition, time synchronization, frequency tracking, spread-spectrum processing, modulation and demodulation functions, and forward error correction.

Terminal 2900 can also include various user interfaces 2910 coupled to the base band processor 2908. User interfaces 2910 can include a keypad, mouse, touch screen, display, ringer, vibrator, audio speaker, microphone, camera and/or other input/output devices.

The base band processor 2908 comprises a processor 2902. In a software-based implementation of the base band processor 2908, the processor 2902 may be a software program running on a microprocessor. However, as those skilled in the art will readily appreciate, the processor 2902 is not limited to this embodiment, and may be implemented by any means known in the art, including any hardware configuration, software configuration, or combination thereof, which is capable of performing the various functions described herein. The processor 2902 can be coupled to memory 2912 for the storage of data.

It is to be understood that the embodiments described herein may be implemented by hardware, software, firmware, middleware, microcode, or any combination thereof. When the systems and/or methods are implemented in software, firmware, middleware or microcode, program code or code segments, they may be stored in a machine-readable medium, such as a storage component. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted using any suitable means including memory sharing, message passing, token passing, network transmission, *etc.*

What has been described above includes examples of one or more embodiments. It is, of course, not possible to describe every conceivable combination of components or methodologies for purposes of describing these embodiments, but one of ordinary skill in the art may recognize that many further combinations and permutations of such embodiments are possible. Accordingly, the embodiments described herein are intended to embrace all such alterations, modifications, and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1. A method (1900, 2000, 2100, 2300) for configuring a traditionally wired device to communicate either through a wired protocol or through a wireless protocol, said communicating comprising communicating digital data between a host entity (202) and at least one remote interface device (500) for user interface data, said method comprising:

   associating (1902) the at least one remote interface device (500) with the host entity (202);
   determining if a communication should be sent to the host entity using said wired protocol or said wireless protocol, based on the communication's data type;
   sending (1904) a capability packet to the host entity (202) that includes at least one capability of the at least one remote interface device (500);
   transmitting (1906) a status packet to the host entity (500) that includes at least one link quality information, wherein the remote interface device (500) is selectively disassociated if the determined protocol is the wireless protocol and if the quality of the communication link has fallen below a threshold; and
   buffering said digital data in a buffer so that if a change is made from said one protocol to the other during the communication no interruption occurs.

2. The method (1900, 2000, 2100, 2300) of claim 1, further comprising:

   receiving a request from the host entity (202) for an updated status packet;
   updating the status packet; and
   sending the updated status packet to the host entity (202) in response to the received request.

3. The method (1900, 2000, 2100, 2300) of claim 2, further comprising:

   determining (2108) an association between the at least one remote interface device and the host entity is broken when a host entity status packet is not received within a period; and
   disassociating (2112) the at least one remote interface device from the host entity.

4. The method (1900, 2000, 2100, 2300) of claim 1, wherein the associating the remote interface device with the host entity comprises:

   sending (2302) an association request packet to the host entity; and
   resending the association request packet if an association timer expires before an association response packet is received from the host entity (202) in response to the sent association request packet.

5. The method (1900, 2000, 2100) of claim 1, further comprising sending an updated status packet periodically or when a status change is detected.

6. The method (1900, 2000, 2100) of claim 1, further comprising:

   determining (2110) if a communication between the at least one remote interface device (500) and the host entity (202) should be stopped;
   disassociating (2112) with the host entity (202) if the communication should be stopped; and
   entering (2116) a disassociated state.

7. An apparatus for configuring a traditionally wired device to communicate either through a wired protocol or through a wireless protocol, said communicating comprising communicating digital data between a host entity (202) and at least one remote interface device (500) for user interface data, comprising:

   means for associating said at least one remote interface device (500) with said host entity (202);
   means for determining if a communication should be sent to the remote sender using said wired protocol or said wireless protocol, based on the communication's data type;
   means for communicating at least one capability information of the at least one remote interface device wirelessly to the host entity;
   means for sending at least one link quality data packet periodically to the host entity;
   means for selectively disassociating with the host entity (202), if the determined protocol is the wireless protocol and if the quality of the communication link has fallen below a threshold; and

means for buffering said digital data so that if a change is made from said one protocol to the other during the communication no interruption occurs.

8. A method (2400) for configuring a traditionally wired device to communicate either through a wired protocol or through a wireless protocol, said communicating comprising digital data communication between a sender and at least one remote receiver for user interface data, comprising:

associating (2402) with the at least one remote interface device (500);
determining if a communication should be sent to the at least one remote receiver using said wired protocol or said wireless protocol, based on the communication's data type;
receiving (2404) a packet that includes at least one capability of the at least one remote interface device;
receiving (2406) a link quality information packet on a reverse link from the at least one remote interface device (500), wherein the remote interface device (500) is selectively disassociated if the determined protocol is the wireless protocol and if the quality of the communication link has fallen below a threshold; and
buffering said digital data so that if a change is made from said one protocol to the other during the communication no interruption occurs.

9. An apparatus for configuring a traditionally wired device to communicate either through a wired protocol or through a wireless protocol, said communicating comprising digital data communication between a sender and at least one remote interface device (500) for user interface data, said apparatus comprising:

means for selectively associating with said at least one remote interface device (500);
means for sending an association response to the at least one remote interface device (500), wherein the association response contains a client identification for the at least one remote interface device;
means for receiving a capability packet;
means for associating the at least one remote interface device (500) with an identification based in part on at least one capability included in the capability packet; and
means for determining if a communication should be sent to the at least one remote client device using said wired protocol or said wireless protocol, based on the communication's data type,
means for receiving a link quality information packet on a reverse link from the at least one remote interface device (500), wherein the remote interface device (500) is selectively disassociated if the determined protocol is the wireless protocol and if the quality of the communication link has fallen below a threshold; and
means for buffering said digital data so that if a change is made from said one protocol to the other during the communication no interruption occurs.

10. A computer-readable medium embodying instructions for carrying out a method for transmitting high rate user interface data when executed on a processor, the method comprising the steps of any of claims 1 to 6 or 8.

**Patentansprüche**

1. Ein Verfahren (1900, 2000, 2100, 2300) zum Konfigurieren einer üblicherweise drahtgebundenen Einrichtung zum Kommunizieren entweder über ein drahtgebundenes Protokoll oder über ein Drahtlosprotokoll, wobei das Kommunizieren Kommunizieren digitaler Daten zwischen einer Host-Einheit (202) und wenigstens einer Fernschnittstelleneinrichtung (500) für Nutzerschnittstellendaten aufweist, wobei das Verfahren Folgendes aufweist:

Assoziieren (1902) der wenigstens einen Fernschnittstelleneinrichtung (500) mit der Host-Einheit (202);
Bestimmen, ob eine Kommunikation an die Host-Einheit unter Verwendung des drahtgebundenen Protokolls oder des Drahtlosprotokolls gesendet werden sollte, basierend auf dem Datentyp der Kommunikation;
Senden (1904) eines Capability- bzw. Fähigkeitspakets an die Host-Einheit (202), das wenigstens eine Fähigkeit der wenigstens einen Fernschnittstelleneinrichtung (500) enthält;
Übertragen (1906) eines Statuspakets an die Host-Einheit (500), das wenigstens eine Verbindungsqualitätsinformation enthält, wobei die Fernschnittstelleneinrichtung (500) selektiv dissoziiert wird, wenn das bestimmte Protokoll das Drahtlosprotokoll ist und wenn die Qualität der Kommunikationsverbindung unter einen Schwellenwert gefallen ist; und
Puffern der digitalen Daten in einem Puffer, so dass wenn eine Änderung bzw. ein Wechsel von dem einen Protokoll zu dem anderen während der Kommunikation vorgenommen wird, keine Unterbrechung auftritt.

2. Verfahren (1900, 2000, 2100, 2300) nach Anspruch 1, das weiter Folgendes aufweist:

   Empfangen einer Anfrage von der Host-Einheit (202) nach einem aktualisierten Statuspaket;
   Aktualisieren des Status-Pakets; und
   Senden des aktualisierten Status-Pakets an die Host-Einheit (202) ansprechend auf die empfangene Anfrage.

3. Verfahren (1900, 2000, 2100, 2300) nach Anspruch 2, das weiter Folgendes aufweist:

   Bestimmen (2108), dass eine Assoziierung zwischen wenigstens einer Fernschnittstelleneinrichtung und der Host-Einheit unterbrochen ist, wenn Host-Einheits-Statuspaket nicht innerhalb einer Periode empfangen wird; und
   Dissoziieren (2112) der wenigstens einen Fernschnittstelleneinrichtung von der Host-Einheit.

4. Verfahren (1900, 2000, 2100, 2300) nach Anspruch 1, wobei das Assoziieren der Fernschnittstelleneinrichtung mit der Host-Einheit Folgendes aufweist:

   Senden (2302) eines Assoziierungsanfragepakets an die Host-Einheit; und
   erneutes Senden des Assoziierungsanfragepakets, wenn ein Assoziierungstimer abläuft, bevor ein Assoziierungsantwortpaket von der Host-Einheit (202) ansprechend auf das gesendete Assoziierungsanfragepaket empfangen wird.

5. Verfahren (1900, 2000, 2100) nach Anspruch 1, das weiter Senden eines aktualisierten Statuspakets auf periodische Weise oder wenn eine Statusänderung detektiert wird, aufweist.

6. Verfahren (1900, 2000, 2100) nach Anspruch 1, das weiter Folgendes aufweist:

   Bestimmen (2110), ob eine Kommunikation zwischen der wenigstens einen Fernschnittstelleneinrichtung (500) und der Host-Einheit (202) angehalten bzw. beendet werden sollte;
   Dissoziieren (2112) von der Host-Einheit (202), wenn die Kommunikation beendet werden sollte; und
   Eintreten (2116) in einen dissoziierten Zustand.

7. Eine Vorrichtung zum Konfigurieren einer üblicherweise drahtgebundenen Einrichtung zum Kommunizieren über entweder ein drahtgebundenes Protokoll oder über ein Drahtlosprotokoll, wobei das Kommunizieren Kommunizieren digitaler Daten zwischen einer Host-Einheit (202) und wenigstens einer Fernschnittstelleneinrichtung (500) für Nutzerschnittstellendaten aufweist, wobei die Vorrichtung Folgendes aufweist:

   Mittel zum Assoziieren der wenigstens einen Fernschnittstelleneinrichtung (500) mit der Host-Einheit (202);
   Mittel zum Bestimmen, ob eine Kommunikation an den entfernten Sender bzw. Fernsender unter Verwendung des drahtgebundenen Protokolls oder
   des Drahtlosprotokolls gesendet werden sollte, basierend auf dem Datentyp der Kommunikation;
   Mittel zum drahtlosen Kommunizieren wenigstens einer Fähigkeitsinformation der wenigstens einen Fernschnittstelleneinrichtung an die Host-Einheit;
   Mittel zum Senden wenigstens eines Verbindungsqualitätsdatenpakets auf periodische Weise an die Host-Einheit;
   Mittel zum selektiven Dissoziieren von der Host-Einheit (202), wenn das bestimmte Protokoll das Drahtlosprotokoll ist und wenn die Qualität der Kommunikationsverbindung unter einen Schwellenwert gefallen ist; und
   Mittel zum Puffern der digitalen Daten, so dass wenn eine Änderung bzw. ein Wechsel von dem einen Protokoll zu dem anderen während der Kommunikation vorgenommen wird, keine Unterbrechung auftritt.

8. Ein Verfahren (2400) zum Konfigurieren einer üblicherweise drahtgebundenen Einrichtung zum Kommunizieren über entweder ein drahtgebundenes Protokoll oder über ein Drahtlosprotokoll, wobei das Kommunizieren Digitaldatenkommunikation zwischen einem Sender und wenigstens einem Fernempfänger für Nutzerschnittstellendaten aufweist, wobei das Verfahren Folgendes aufweist:

   Assoziieren (2402) mit der wenigstens einen Fernschnittstelleneinrichtung (500);
   Bestimmen, ob eine Kommunikation an den wenigstens einen entfernten Empfänger bzw. Fernempfänger unter Verwendung des drahtgebundenen Protokolls oder des Drahtlosprotokolls gesendet werden sollte, und zwar basierend auf dem Datentyp der Kommunikation;

Empfangen (2404) eines Pakets, das wenigstens eine Fähigkeit der wenigstens einen Fernschnittstellenrichtung beinhaltet;

Empfangen (2406) eines Verbindungsqualitätsinformationspakets auf einer Rückwärtsverbindung von der wenigstens einen Fernschnittstelleneinrichtung (500), wobei die Fernschnittstelleneinrichtung (500) selektiv dissoziiert wird, wenn das bestimmte Protokoll das Drahtlosprotokoll ist und wenn die Qualität der Kommunikationsverbindung unter einen Schwellenwert gefallen ist; und

Puffern der Digitaldaten, so dass wenn eine Änderung bzw. ein Wechsel von dem einen Protokoll zu dem anderen während der Kommunikation vorgenommen wird, keine Unterbrechung auftritt.

9. Ein Vorrichtung zum Konfigurieren einer üblicherweise drahtgebundenen Einrichtung zum Kommunizieren durch entweder ein drahtgebundenes Protokoll oder durch ein Drahtlosprotokoll, wobei das Kommunizieren Digitaldatenkommunikation zwischen einem Sender und wenigstens einer Fernschnittstelleneinrichtung (500) für Nutzerschnittstellendaten aufweist, wobei die Vorrichtung Folgendes aufweist:

Mittel zum selektiven Assoziieren mit der wenigstens einen Fernschnittstelleneinrichtung (500);
Mittel zum Senden einer Assoziierungsantwort an die wenigstens eine Fernschnittstelleneinrichtung (500), wobei die Assoziierungsantwort eine Client-Identifikation für die wenigstens eine Fernschnittstelleneinrichtung enthält;
Mittel zum Empfangen eines Fähigkeitspakets;
Mittel zum Assoziieren der wenigstens einen Fernschnittstelleneinrichtung (500) mit einer Identifikation basierend teilweise auf wenigstens einer Fähigkeit, die in dem Fähigkeitspaket enthalten ist; und
Mittel zum Bestimmen, ob eine Kommunikation an die wenigstens eine Fern-Client-Einrichtung unter Verwendung des drahtgebundenen Protokolls oder
des Drahtlosprotokolls gesendet werden sollte, und zwar basierend auf dem Datentyp der Kommunikation;
Mittel zum Empfangen eines Verbindungsqualitätsinformationspakets auf einer Rückwärtsverbindung von der wenigstens einen Fernschnittstelleneinrichtung (500), wobei die Fernschnittstelleneinrichtung (500) selektiv dissoziiert wird, wenn das bestimmte Protokoll das Drahtlosprotokoll ist und wenn die Qualität der Kommunikationsverbindung unter einen Schwellenwert gefallen ist; und
Mittel zum Puffern der Digitaldaten, so dass wenn eine Änderung bzw. ein Wechsel von dem einen Protokoll zu dem anderen während der Kommunikation vorgenommen wird, keine Unterbrechung auftritt.

10. Ein computerlesbares Medium, das Instruktionen zum Ausführen eines Verfahrens zum Übertragen von Nutzerschnittstellendaten mit hoher Rate verkörpert, wenn diese auf einem Prozessor ausgeführt werden, wobei das Verfahren die Schritte nach einem der Ansprüche 1 bis 6 oder 8 aufweist.

## Revendications

1. Procédé (1900, 2000, 2100, 2300) pour configurer un dispositif filaire traditionnel pour communiquer soit par un protocole filaire soit par un protocole sans fil, la communication comprenant la communication de données numériques entre une entité hôte (202) et au moins un dispositif d'interface distant (500) pour des données d'interface d'utilisateur, le procédé comprenant :

associer (1902) ledit au moins un dispositif d'interface distant (500) à l'entité hôte (202) ;
déterminer si une communication doit être envoyée vers l'entité hôte en utilisant le protocole filaire ou le protocole sans fil, sur la base du type des données de la communication ;
envoyer (1904) à l'entité hôte (202) un paquet de capacité qui inclut au moins une capacité dudit au moins un dispositif d'interface distant (500) ;
transmettre (1906) à l'entité hôte (500) un paquet de statut qui inclut au moins une information de qualité de liaison, l'association du dispositif d'interface distant (500) étant sélectivement supprimée si le protocole déterminé est le protocole sans fil et si la qualité de la liaison de communication est descendue en dessous d'un seuil ; et
mettre en tampon les données numériques dans un tampon afin que si un changement est fait dudit protocole vers l'autre pendant la communication, aucune interruption n'ait lieu.

2. Procédé (1900, 2000, 2100, 2300) selon la revendication 1, comprenant en outre :

recevoir une requête de l'entité hôte (202) pour un paquet de statut mis à jour ;

mettre à jour le paquet de statut ; et

envoyer le paquet de statut mis à jour à l'entité hôte (202) en réponse à la requête reçue.

3. Procédé (1900, 2000, 2100, 2300) selon la revendication 2, comprenant en outre :

déterminer (2108) qu'une association entre ledit au moins un dispositif d'interface distant et l'entité hôte est rompue lorsqu'un paquet de statut de l'entité hôte n'a pas été reçu après un certain temps ; et
supprimer l'association (2112) dudit au moins un dispositif d'interface distant avec l'entité hôte.

4. Procédé (1900, 2000, 2100, 2300) selon la revendication 1, dans lequel l'association du dispositif d'interface distant avec l'entité hôte comprend :

envoyer (2302) un paquet de requête d'association à l'entité hôte ; et
renvoyer le paquet de requête d'association si un minuteur d'association expire avant qu'un paquet de réponse d'association ne soit reçu de l'entité hôte (202) en réponse au paquet de requête d'association envoyé.

5. Procédé (1900, 2000, 2100) selon la revendication 1, comprenant en outre l'envoi d'un paquet de statut mis à jour, périodiquement ou lorsqu'un changement de statut est détecté.

6. Procédé (1900, 2000, 2100) selon la revendication 1, comprenant en outre :

déterminer (2110) si une communication entre ledit au moins un dispositif d'interface distant (500) et l'entité hôte (202) doit être stoppée ;
supprimer l'association (2112) avec l'entité hôte (202) si la communication doit être stoppée ; et
passer (2116) dans un état d'association supprimée.

7. Dispositif pour configurer un dispositif filaire traditionnel pour communiquer soit par un protocole filaire soit par un protocole sans fil, la communication comprenant une communication de données numériques entre une entité hôte (202) et au moins un dispositif d'interface distant (500) pour des données d'interface d'utilisateur, comprenant :

des moyens pour associer ledit au moins un dispositif d'interface distant (500) à l'entité hôte (202) ;
des moyens pour déterminer si une communication doit être envoyée à l'entité hôte en utilisant le protocole filaire ou le protocole sans fil, sur la base du type des données de la communication ;
des moyens pour communiquer au moins une information de capacité dudit au moins un dispositif d'interface distant, sans fil à l'entité hôte ;
des moyens pour envoyer au moins un paquet de données de qualité de liaison périodiquement à l'entité hôte ;
des moyens pour supprimer sélectivement l'association avec l'entité hôte (202), si le protocole déterminé est le protocole sans fil et si la qualité de la liaison de communication est descendue en dessous d'un seuil ; et
des moyens pour mettre en tampon les données numériques afin que si un changement est fait dudit protocole vers l'autre pendant la communication, aucune interruption n'ait lieu.

8. Procédé (2400) pour configurer un dispositif filaire traditionnel pour communiquer soit par un protocole filaire soit par un protocole sans fil, la communication comprenant la communication de données numériques entre un émetteur et au moins un récepteur distant pour des données d'interface d'utilisateur, comprenant :

créer une association (2402) avec ledit au moins un dispositif d'interface distant (500) ;
déterminer si une communication doit être envoyée audit au moins un récepteur distant en utilisant le protocole filaire ou le protocole sans fil, sur la base du type de données de la communication ;
recevoir (2404) un paquet qui inclut au moins une capacité dudit au moins un dispositif d'interface distant ;
recevoir (2406) un paquet d'informations de qualité de liaison sur une liaison inverse provenant dudit au moins un dispositif d'interface distant (500), l'association du dispositif d'interface distant (500) étant sélectivement supprimée si le protocole déterminé est le protocole sans fil et si la qualité de la liaison de communication est descendue en dessous d'un seuil ; et
mettre en tampon les données numériques afin que si un changement est fait dudit protocole pour l'autre pendant la communication, aucune interruption n'ait lieu.

9. Dispositif pour configurer un dispositif filaire traditionnel pour communiquer soit par un protocole filaire soit par un protocole sans fil, la communication comprenant la communication de données numériques entre un émetteur et au moins un dispositif d'interface distant (500) pour des données d'interface d'utilisateur, le dispositif comprenant :

des moyens pour créer une association sélectivement avec ledit au moins un dispositif d'interface distant (500) ;
des moyens pour envoyer une réponse d'association audit au moins un dispositif d'interface distant (500), la réponse d'association comprenant une identification de client pour ledit au moins un dispositif d'interface distant ;
des moyens pour recevoir un paquet de capacité ;
des moyens pour associer ledit au moins un dispositif d'interface distant (500) à une identification sur la base en partie d'au moins une capacité incluse dans le paquet de capacité ; et
des moyens pour déterminer si une communication doit être envoyée audit au moins un dispositif client distant en utilisant le protocole filaire ou le protocole sans fil, sur la base du type de données de la communication,
des moyens pour recevoir un paquet d'informations de qualité de liaison sur une liaison inverse provenant dudit au moins un dispositif d'interface distant (500), l'association du dispositif d'interface distant (500) étant sélectivement supprimée si le protocole déterminé est le protocole sans fil et si la qualité de la liaison de communication est descendue en dessous d'un seuil ; et
des moyens pour mettre en tampon les données numériques afin que si un changement est fait dudit protocole vers l'autre pendant la communication, aucune interruption n'ait lieu.

10. Support lisible par un ordinateur incorporant des instructions pour réaliser un procédé pour transmettre des données d'interface d'utilisateur à haut débit, lorsqu'elles sont exécutées sur un processeur, le procédé comprenant les étapes de l'une quelconque des revendications 1 à 6 ou 8.

FIG. 1

## FIG. 2

HOST — 202

206

MDDI CLIENT (C1) — 204

208

UWB MAC | UWB PHY

200

## FIG. 3

HOST — 302 | C1 — 304

306

UWB MAC | UWB PHY

300

## FIG. 4

WIRELESS SENDER — 402

404

UWB MAC | UWB PHY

400

## FIG. 5

DISPLAY — 504

CLIENT (C2) — 502

UWB MAC | UWB PHY

500

┌─────────────────────────────────┐                    ┌─────────────────────────────────┐
│          ╱─602                   │                    │          ╱─604                   │
│         TRANSMITTER              │                    │          RECEIVER               │
│    ┌ ─ ─ ─ ─ ─ ─ ─╱─606 ─ ┐      │                    │    ┌ ─ ─ ─ ─ ─ ─ ─╱─612 ─ ┐      │
│    │                      │      │                    │    │                      │      │
│    │        HOST          │      │                    │    │       DEVICE         │      │
│    │                      │      │                    │    │                      │      │
│    └ ─ ─ ─ ─ ─ ─ ─ ─ ─ ─ ─┘      │     FORWARD        │    └ ─ ─ ─ ─ ─ ─ ─ ─ ─ ─ ─┘      │
│              ↕          ╱─608     │      LINK          │              ↕          ╱─614    │
│    ┌ ─ ─ ─ ─ ─ ─ ─ ─ ─ ─ ─┐      │  ───────────→      │    ┌ ─ ─ ─ ─ ─ ─ ─ ─ ─ ─ ─┐      │
│    │                      │      │                    │    │                      │      │
│    │     CLIENT (C1)      │      │                    │    │     CLIENT (C2)      │      │
│    │                      │      │   REVERSE LINK     │    │                      │      │
│    └ ─ ─ ─ ─ ─ ─ ─ ─ ─ ─ ─┘      │  ←───────────      │    └ ─ ─ ─ ─ ─ ─ ─ ─ ─ ─ ─┘      │
│              ↕          ╱─610     │                    │              ↕          ╱─616    │
│    ┌ ─ ─ ─ ─ ─ ─ ─ ─ ─ ─ ─┐      │                    │    ┌ ─ ─ ─ ─ ─ ─ ─ ─ ─ ─ ─┐      │
│    │  COMMUNICATION        │     │                    │    │  COMMUNICATION        │     │
│    │    COMPONENT          │     │                    │    │    COMPONENT          │     │
│    └ ─ ─ ─ ─ ─ ─ ─ ─ ─ ─ ─┘      │                    │    └ ─ ─ ─ ─ ─ ─ ─ ─ ─ ─ ─┘      │
└─────────────────────────────────┘                    └─────────────────────────────────┘

╱─600

**FIG. 6**

EP 2 021 908 B1

700

**TRANSMITTER** ─702

**HOST COMPONENT** ─706

718─ QUERY MODULE

720─ MEASUREMENT MODULE

─708
CLIENT (C1) COMPONENT

─710
COMMUNICATION COMPONENT

FORWARD LINK

REVERSE LINK

**RECEIVER** ─704

─712
DEVICE

─714
CLIENT (C2) COMPONENT

NOTIFIER MODULE ─722

ASSIGNER MODULE ─724

─716
COMMUNICATION COMPONENT

WIRED MODULE ─726

WIRELESS MODULE ─728

## FIG. 7

FIG. 8

800

802

TRANSMITTER 804 RECEIVER

HOST 806
CLIENT (C1) 808
COMMUNICATION COMPONENT 810

DEVICE 812
CLIENT (C2) 814
COMMUNICATION COMPONENT 816

FORWARD LINK

REVERSE LINK

MEMORY 818

PROCESSOR 820

─900

| | | | |
|---|---|---|---|
| ─902 | ─904 | ─906 | ─908 |
| RECEIVER | WIRELESS COMMUNICATOR | WIRED COMMUNICATOR | DETERMINER |

**FIG. 9**

EP 2 021 908 B1

**FIG. 10**

EP 2 021 908 B1

**FIG. 11**

**FIG. 12**

START

—1300

PLACE A PORTION OF CLIENT ON MDDI SENDER ⟋—1302

PLACE A PORTION OF CLIENT ON MDDI RECEIVER ⟋—1304

PROVIDE WIRED AND WIRELESS FUNCTIONALITY AT THE MDDI RECEIVER ⟋—1306

END

# FIG. 13

START

1400

QUERY HOST MAC — 1402

MEASURE ROUND
TRIP DELAY — 1404

ASCERTAIN FORWARD
AND REVERSE LINK,
RATE — 1406

COMPUTE OPERATION
RATE — 1408

SEND OPERATION
RATE TO RECEIVER — 1410

END

# FIG. 14

1500

```
                    ┌──────────┐
                    │  START   │
                    └──────────┘
```

PLACE FORWARD
LINK
DATA IN BUFFER ── 1502

REQUEST
UNIDIRECTIONAL
CTAs ── 1504

SEND FORWARD LINK
DATA ── 1506

PLACE REVERSE LINK
DATA IN BUFFER ── 1508

REQUEST REVERSE
DIRECTION CTAs ── 1510

SEND REVERSE LINK
DATA ── 1512

SEND DATA TO MDDI
HOST IN REVERSE
ENCAPSULATION
PACKET ── 1514

```
                    ┌──────────┐
                    │   END    │
                    └──────────┘
```

# FIG. 15

1600

START

REQUEST CTA FOR *m* mSEC IN FORWARD DIRECTION —1602

REQUEST CTA FOR *n* mSEC IN REVERSE DIRECTION —1604

COMPARE FORWARD AND REVERSE CTAs TO EXPECTED RATIO —1606

SEND REVERSE LINK DATA DURING CTAs RESERVED FOR REVERSE DIRECTION —1608

DERIVE TIME DURATION OF MAC FRAME —1610

END

**FIG. 16**

R1 ─1704

1702─ SENDER

R2 ─1706

R3 ─1708

# FIG. 17

─1800

| Client # | MAC address | Client ID |
|----------|-------------|-----------|
| 1 | X:Y:Z:P:Q:R | C21 |
| 2 | U:V:W:L:M:N | C22 |

# FIG. 18

1900

START

ASSOCIATE WITH HOST
ENTITY                    1902

SEND CAPABILITY PACKET    1904

TRANSMIT STATUS
PACKET                    1906

END

FIG. 19

2000

START

2002

SEND ASSOCIATION
REQUEST PACKET

2004

START TIMER

2006

TIMER EXPIRED? — YES

NO

2008

ASSOCIATION
RESPONSE PACKET
RECEIVED? — NO

YES

2010

SEND CAPABILITY PACKET

2012

TRANSMIT STATUS
PACKET

**FIG. 20**

END

```
                                                        ┌─2100

              ╭─────────────╮
              │    START    │
              ╰─────────────╯
                     │
                     ▼
              ┌─────────────┐   ┌─2102
              │ ASSOCIATE WITH│
              │  HOST ENTITY │
              └─────────────┘
                     │
                     ▼
              ┌─────────────┐   ┌─2104
              │ SEND CAPABILITY│
              │    PACKET    │
              └─────────────┘
                     │
                     ▼
              ┌─────────────┐   ┌─2106
              │ TRANSMIT STATUS│
              │    PACKET    │
              └─────────────┘
```

ASSOCIATE WITH HOST ENTITY — 2102

SEND CAPABILITY PACKET — 2104

TRANSMIT STATUS PACKET — 2106

DETERMINE ASSOCIATION IS BROKEN — 2108

DECIDE TO STOP COMMUNICATION — 2110

SEND DISSOCIATION REQUEST — 2112

RECEIVE DISSOCIATION RESPONSE — 2114

ENTER DISASSOCIATED STATE — 2116

END

**FIG. 21**

39

—2200

```
          ┌─────────────┐
          │    START    │
          └──────┬──────┘
                 │
                 ▼
    ┌────────────────────────┐
    │ ASSOCIATE WITH REMOTE  │ ──2202
    │     USER INTERFACE     │
    │       DEVICE(S)        │
    └───────────┬────────────┘
                │
                ▼
    ┌────────────────────────┐
    │  RECEIVE A PACKET THAT │ ──2204
    │   INCLUDE CAPABILITY   │
    │      INFORMATION       │
    └───────────┬────────────┘
                │
                ▼
    ┌────────────────────────┐
    │ RECEIVE LINK QUALITY   │ ──2206
    │     INFORMATION        │
    └───────────┬────────────┘
                │
                ▼
          ┌─────────────┐
          │     END     │
          └─────────────┘
```

# FIG. 22

2300

START

2302

TRANSMIT
ASSOCIATION
REQUEST PACKET

2304

START TIMER

2306

TIMER EXPIRED? —— YES

NO

2308

PACKET
RECEIVED?

NO

YES

RECEIVE LINK QUALITY
INFORMATION

2310

END

# FIG. 23

FIG. 24

```
                              ┌─────────────┐
                              │    START    │
                              └──────┬──────┘
                                     │
                         ┌───────────▼──────────┐  ╱─2402
                         │ ASSOCIATE WITH REMOTE│
                         │     RECEIVER(S)      │
                         └───────────┬──────────┘
                                     │
                         ┌───────────▼──────────┐  ╱─2404
                         │  RECEIVE A PACKET THAT│
                         │  INCLUDES CAPABILITY  │
                         │     INFORMATION       │
                         └───────────┬──────────┘
                                     │
                         ┌───────────▼──────────┐  ╱─2406
                         │  RECEIVE LINK QUALITY │
                         │      INFORMATION      │
                         └──┬─────────────────┬──┘
```

—2400

DETERMINE COMMUNICATION SHOULD BE DISABLED  —2408

SEND DISSOCIATION REQUEST PACKET  —2410

RECEIVE DISSOCIATION REQUEST REPLY  —2412

SEND DISSOCIATION COMPLETION ACKNOWLEDGEMENT  —2414

RECEIVE DISSOCIATION REQUEST  —2416

SEND DISSOCIATION RESPONSE ACKONWLEDGMENT  —2418

REMOVE IDENTIFICATION FROM ASSOCIATION TABLE  —2420

END

**FIG. 25**

─2600

─2602

LOGICAL MODULE
FOR ASSOCIATING

─2604

LOGICAL MODULE
FOR COMMUNICATING

─2606

LOGICAL MODULE
FOR SENDING A
DATA PACKET

─2608

LOGICAL MODULE FOR
SELECTIVELY
DISASSOCIATING

─2610

LOGICAL MODULE
FOR RECEIVING
A DATA PACKET

# FIG. 26

┌─────────────────────────┐
│                         │ ╱─2700
│                         │
└─────────────────────────┘

┌─────────────────────────┐ ╱─2702
│        MEMORY           │
└─────────────────────────┘

┌─────────────────────────┐ ╱─2704
│       PROCESSOR         │
└─────────────────────────┘

┌─────────────────────────┐ ╱─2706
│      INFORMATION        │
│      COMPONENT          │
└─────────────────────────┘

┌─────────────────────────┐ ╱─2708
│      STATUS TIMER       │
└─────────────────────────┘

# FIG. 27

—2800

LOGICAL MODULE FOR
ASSOCIATING —2802

↕

LOGICAL MODULE
FOR SENDING AN
ASSOCIATION RESPONSE —2804

↕

LOGICAL MODULE FOR
RECEIVING A
CAPABILITY PACKET —2806

↕

LOGICAL MODULE FOR
ASSOCIATING WITH AN
IDENTIFICATION —2808

# FIG. 28

_2900_

_2906_

ANTENNA

_2904_

TRANSCEIVER

_2908_

BASE BAND
PROCESSOR

_2902_

PROCESSOR

_2912_

MEMORY

_2910_

USER
INTETERFACES

# FIG. 29

**EP 2 021 908 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003033417 A